# EUROPÄISCHE PATENTSCHRIFT

(11) **EP 0 861 460 B1**
(45) Veröffentlichungstag und Bekanntmachung des Hinweises auf die Patenterteilung: **29.09.1999**
(21) Anmeldenummer: 96938065.8
(22) Anmeldetag: 04.11.1996
(51) Int. Cl.: G05D 21/02

(54) **VORRICHTUNG UND VERFAHREN ZUR EINSTELLUNG VON IONENKONZENTRATIONEN**
DEVICE AND PROCESS FOR ADJUSTING ION CONCENTRATIONS
DISPOSITIF ET PROCEDE D'AJUSTEMENT DE CONCENTRATIONS IONIQUES

(30) Priorität: 14.11.1995 DE 19542375; 03.05.1996 DE 19617828; 18.06.1996 DE 19624150; 28.08.1996 DE 19634829
(43) Veröffentlichungstag der Anmeldung: 02.09.1998
(73) Patentinhaber: Fuhr, Günter, 13127 Berlin (DE)
(72) Erfinder: FUHR, Günter, D-13127 Berlin (DE); HAGEDORN, Rolf, D-13057 Berlin (DE)
(74) Vertreter: Hertz, Oliver, Dr.
(86) Internationale Anmeldenummer: EP9604794
(87) Internationale Veröffentlichungsnummer: WO9718503

(56) Entgegenhaltungen:
- EP-A- 0 026 591
- DE-A- 2 114 395
- FR-A- 2 645 292
- GB-A- 1 177 693
- US-A- 4 152 215
- JOURNAL OF CRYSTAL GROWTH, Bd. 144, Nr. 3/4, 11.Dezember 1994, AMSTERDAM, NL, Seiten 253-257, XP000483664 O. SHIMOURA: "FAST GROWTH AND EVALUATION OF POTASSIUM DIHYDROGEN PHOSPHATE SINGLES CRYSTALS BY ELECTRODIALYSIS WITH PH CONTROL" in der Anmeldung erwähnt

## Beschreibung

Die Erfindung betrifft eine Vorrichtung und ein Verfahren, mit deren Hilfe die Ionenkonzentration in einer Lösung amperometrisch eingestellt, geregelt und gemessen werden können. Die Erfindung betrifft insbesondere ein pH-Einstell- und Regelgerät.

Auf dem Gebiet der pH-Einstellung ist es bekannt, den pH-Wert insbesondere im Laborbereich über Titrieren mit Lösungen (in der Regel Säuren und Basen) einzustellen. Eine Einstellung des pH-Wertes ist auf diese Weise nur mit einer Volumenvergrößerung möglich, die insbesondere bei kleinen Lösungsmengen beträchtlich oder schwierig zu dosieren ist. Ungepufferte Lösungen lassen sich zudem nur mit großem Aufwand auf eine Genauigkeit im Bereich von 1/10 oder 1/100 des pH einstellen. Um diese Genauigkeit zu erzielen, werden verdünnte Säuren und Basen verwendet, was den Nachteil der Volumenvergrößerung noch verstärkt. Infolge der dazu benötigten Dosiermittel ist eine Automatisierung aufwendig und kompliziert. Es ist auch bekannt, Ionen mit Hilfe eines Stromflusses zu titrieren [z.B. Nagy, G. et al. E. Anal. Chim. Acta 91 (1977) 87]. Entsprechende Vorrichtungen haben jedoch den Nachteil, daß Elektroden direkt in die zu titrierende Lösung tauchen. Dies kann zu unannehmbaren Elektrodenreaktionen unter Radikalbildung insbesondere an der Anode führen.

Die größten Probleme entstehen bei der Einstellung von pH-Werten in Volumina im ml-Bereich und darunter, wie sie vor allem bei genetischen, medizinisch-diagnostischen und biochemische Methoden unabdingbar sind. Allein durch Umfüllen einer Lösung von einem Plastikgefäß in ein anderes treten unkontrollierte pH-Änderungen von bis zu einer halben Einheit und mehr auf, die mit den Oberflächeneigenschaften der Behältnisse zu erklären sind (anhaftende Moleküle, Ionenaustauschereigenschaften etc.). Diese Änderungen werden derzeit hingenommen oder es wird ihnen durch aufwendiges Spülen mit hohem Lösungsverbrauch begegnet. Hinzu kommt, daß häufig in kleinen Volumina (insbesondere bei medizinisch-diagnostischen, biotechnologischen oder auch technischen Routinearbeiten) der pH-Wert kontrolliert und ggf. nachjustiert werden soll, wobei eine Volumenänderung und die damit zusammenhängende chemische Lösungsveränderung oft nur unter Nachteilen bzw. überhaupt nicht akzeptiert werden kann. Bei Techniken, die mit einem sehr begrenzten Lösungsvolumen auskommen müssen, ist deshalb gegenwärtig kaum eine pH-Korrektur möglich, was verschiedentlich Nachweise und Reaktionsbedingungen ungenau machen kann.

Es sind ferner Prinzipien bekannt, nach denen über elektrolytisch bedingte Ionenströme pH-Änderungen erzielt werden. Dabei wird das klassische Prinzip genutzt, wonach bei der Elektrolyse eines Salzes (z. B. von NaNO₃) der Anodenraum infolge der Akkumulation von Anionen (z. B. NO₃⁻) saurer und der Kathodenraum infolge der Akkumulation von Kationen (z. B. Na⁺) basischer wird. Die Ursache dafür liegt in den an den Elektroden ablaufenden Redoxreaktionen.

Im folgenden werden die an den pH-Verschiebungen beteiligten Transportvorgänge näher beschrieben.

Aus theoretischer Sicht beruht jede pH-Verschiebung -ob gewollt oder ungewollt, ob an Elektroden oder in freier Lösung- darauf, daß sich in der betrachteten Lösung die Differenz zwischen der Summe aller Kationen minus der Summe aller Anionen verschiebt (wobei die H⁺ und OH⁻-Ionen nicht mitgerechnet werden dürfen). Eine Methode, die den pH-Wert einer Lösung auf elektrischem Wege beeinflußt, muß demnach diese Differenz verändern können. Die notwendigen Voraussetzungen dafür ergeben sich bereits aus den klassischen Arbeiten von Kohlrausch (Ann. d. Phys., 62 (1897) 209), Logsworth (J. Am. Chem. Soc. 67 (1945) 1109), und MacInnes (The Principles of Electrochemistry, Reinhold Publ. Co., New York 1939) und sollen an Hand einer NaNO₃-Lösung erläutert werden:

Um die Lösung basischer zu machen, muß die Na⁺-Konzentration erhöht und/oder die NO₃⁻-Konzentration vermindert werden. Soll die Regelung elektrisch erfolgen, so fordert dies, daß die Anzahl der auf elektrischem Wege in die Lösung hineingebrachten Na-Ionen größer ist, als die Anzahl der gleichzeitig austretenden Na-Ionen.

Bei einem stromdurchflossenen Elektrolyten kommt es an der einen Seite zu einem Zufluß von Kationen (Anionen) und an der entgegengesetzten Seite zu einem Abfluß von Kationen (Anionen), so daß sich der pH-Wert der Lösung nicht ändert. Enthält eine Elektrolytphase jedoch eine Elektrode, so kommt es an der Elektrode nicht mehr zu einem Ionenstromdurchfluß, d. h. eine Ionensorte kann den entsprechenden Bereich entweder nur erreichen oder nur verlassen.

Die allgemeine Voraussetzung für eine Änderung der Konzentration einer bestimmten Ionensorte in einem bestimmten Volumen besteht darin, daß die betreffende Ionensorte einen divergenten Stromfluß aufweisen muß. Damit gleichbedeutend ist nach Kohlrausch die Aussage, daß die Uberführungszahl der betreffenden Ionensorte im betrachteten Volumen nicht konstant sein darf. Dies ist in wäßrigen Systemen an den Elektroden immer erfüllt. Während in den Elektroden der Stromfluß durch Elektronen erfolgt, wird der Strom im angrenzenden Elektrolyten durch wandernde Ionen erzeugt. Daher weist u. a. der H-Stromfluß eine Divergenz auf, so daß es bei Stromfluß in wäßrigen Systemen in Elektrodennähe stets zu pH-Verschiebungen kommen muß. Da dieser Mechanismus den Ablauf von Redoxreaktionen einschließt, scheidet er als Grundlage für ein allgemein verwendbares Ionen-Einstellsystem aus.

Soll z. B. der pH-Wert einer NaCl-haltigen Lösung (derartige Lösungen sind im biologisch-medizinischen Bereich verbreitet) eingestellt werden, so kommt es an den Anoden leicht zur Hypochlorit- oder sogar zur Chlorationen-Bildung. Diese Ionen würden die einzustellende Lösung wegen ihrer desinfizierenden und bleichenden Wirkung nachteilig beeinflussen ("Vergiftungswirkung").

Ungeachtet dieses Nachteils sind jedoch die an Elektroden ablaufenden Redoxreaktionen von großem Interesse, so daß auch Reaktionen, die den pH-Wert in Elektrodennähe über Redoxprozesse ändern, genutzt und untersucht werden (vgl. Van der Schoot, B., H., Voorthuyzen, H. and Bergveld, P., Sensors & Actuators, B1 (1990) 546; Fuhrmann, B., Spohn, U. and Mohr, K.-H., Biosensors & Bioelectronics 7 (1992) 653, Elektrolytische Titrieranlage, DE-PS-15 98 597 [Verfahren und Vorrichtung zur Bestimmung des Endpunktes von Titrationen], DE-OS-36 18 520, PCT/GB95/01425 [Improvements in or relating to electrochemical measurements]).

Eine über Redoxreaktionen kontrollierte pH-Änderung ist aber nur in Ausnahmefällen möglich, so bei dem System von Shimomura et al. (Shimomura, O., J. Crystal Growth 144, 253, 1994, Shimomura, O., Trans IECE Japan J 67 C, 673, 1984; Yokotani, A., Kolde, H., Sasaki, T., Yamanaka, T. and Yamanaka, C., J. Crystal Growth 67, 627, 1984). Dieses System betrifft die amperometrische pH-Nachführung beim Wachstum von KDP-Einkristallen in gesättigten Lösungen in Behältnissen charakteristischer Maße der Größenordnung 20 bis 30 cm im Verlauf von mehreren Monaten und weist die folgenden Nachteile auf. Erstens erlaubt die pH-Nachführung zur Kompensation von pH-Änderungen in der gesättigten Lösung aufgrund des Kristallwachstums nur eine pH-Änderung in eine Richtung. Zweitens wird der Elektrolyt eines an einen mittleren Einstellraum angrenzenden Anodenraumes mit dem Elektrolyt eines an den Einstellraum angrenzenden Kathodenraumes vermischt, so daß Anionen, insbesondere bei NaCl-haltigen Lösungen z. B. störende Hypochlorit-Ionen, aus dem Anodenraum über den Kathodenraum aktiv in den Einstellraum gelangen können (entsprechendes gilt für die Kationen). Ein solches Vermischen ist für viele Anwendungen wegen der genannten Vergiftungswirkung nicht annehmbar. Schließlich erfolgt die pH-Änderung außerordentlich langsam.

Aus DE-OS 1 571 723 ist ein Verfahren zur pH-Nachführung bei Elektrolyseprozessen mit pH-Änderungen in der zu elektrolysierenden Lösung bekannt. Dabei sind eine oder zwei Elektrolytkammern vorgesehen, mit denen H⁺-Ionen und entsprechende Gegenionen in die einzustellende Lösung geschleust werden, um den pH-Wert zu erhöhen. Alternativ kann das Verfahren zum Einschleusen von OH⁻-Ionen eingesetzt werden.

Das Verfahren gemäß DE-OS 1 571 723 besitzt die folgende Beschränkung. Es ist keine pH-Einstellung oder -Regelung möglich, da die pH-Nachführung langsam ist und immer nur in eine Richtung (entweder Erhöhung oder Erniedrigung des pH-Wertes) erfolgen kann.

Während in einigen Anwendungsfällen die pH-Verschiebungen an den Elektroden eliminiert werden sollen (z. B. in elektrophoretischen Anordnungen), sind sie in den folgenden Fällen gerade erwünscht.

Bei der isoelektrischen Fokussierung wird über eine Trennstrecke ein pH-Gradient mittels Stromfluß erzeugt und zur Proteintrennung verwendet. Unter diesem Gesichtspunkt wurden Multielektrodenanordnungen vorgeschlagen, deren Funktion darin besteht, in einer elektrophoretischen Trennstrecke einen treppenförmigen pH-Gradienten zu erzeugen (Hagedorn, R. et al.: DD 273 316; Deml, M., Pospichal, J., Gebauer, P. und Bocek, P., Czech. Pat., PV 6036-88). Dies geschieht, indem unter der Wirkung elektrischer Felder ein Teil der Trennstrecke auf Kosten des anderen Teils sauer bzw. basisch gemacht wird. Dabei läßt sich ein nahezu stationärer pH-Gradient ausbilden, der den Anforderungen der elektrophoretischen Trennung entspricht, jedoch für eine pH-Regelung aus den folgenden Gründen ungeeignet ist. Erstens laufen die pH-Verschiebungen außerordentlich langsam ab, da sie lediglich durch Diffusionsvorgänge und chemische Reaktionen (Wasserbildung) vermittelt werden. Zweitens ist die Gradientenbildung an unvermischbare Medien gebunden. Damit ist auch dieses System zur allgemein anwendbaren pH-Regelung ungeeignet.

Der vorliegenden Erfindung liegt die Aufgabe zugrunde, eine verbesserte Vorrichtung zur Beeinflussung der Ionenkonzentration auf amperometrischer Basis und ein Verfahren zu deren Betrieb zu schaffen, mit denen die Nachteile herkömmlicher Systeme überwunden werden und die verkürzte Einstellzeiten und die Realisierung von Regelkreisen erlauben. Es ist insbesondere eine Aufgabe der Erfindung, ein verbessertes pH-Einstellgerät zu schaffen, das mit pH-Regeleigenschaften über weite pH-Bereiche für allgemeine Anwendungen z. B. in der Medizin, Pharmakologie, Chemie und anderen technologischen Anwendungen einsetzbar ist.

Diese Aufgabe wird durch die Gegenstände der Patentansprüche 1, 19 und 21 gelöst. Vorteilhafte Ausführungsformen der Erfindung ergeben sich aus den abhängigen Ansprüchen.

Die Erfindung basiert auf der Idee, eine Vorrichtung zu schaffen, bei der abweichend von den bekannten Techniken mindestens drei elektrisch ansteuerbare Elektrolytbereiche vorgesehen sind, mit denen selektiv Ionen in eine Einstell-Lösung transportierbar sind. Ein Elektrolytbereich ist ein abgrenzbares Volumen, das mindestens eine Steuerelektrode enthält und über eine physikalische Phasengrenze (diffusionsminderndes Mittel, z.B. Membran, Kapillare, Diaphragma o. dgl.) mit der Einstell-Lösung oder einem Einstell-Bereich verbunden werden kann. Die Steuerelektrode wird je nach Funktion des Elektrolytbereiches als Kathode oder Anode betrieben.

Die Erfindung ist bei beliebigen Ionenarten einsetzbar und nicht auf die Einstellung von pH-Werten beschränkt. Die Einstellung einer Ionenkonzentration umfaßt auch die Möglichkeit einer mindestens teilweisen Substitution einer Ionenzusammensetzung. Vorzugsweise erfolgt die Einstellung durch Bildung eines Regelkreises, kann aber auch bei Systemen mit bekannten Eigenschaften (Pufferkapazität, Ionentransport usw.) ausschließlich über eine Messung der Steuerströme erfolgen.

Elektrolytbereiche, mit denen die Einstell-Lösung in saure bzw. basische Richtung regulierbar sind, werden als Säuren- bzw. Basenregulator bezeichnet. Bei Anwendungen zur Ionenkonzentrations-Einstellung werden Elektrolytbereiche entsprechend ihrer Funktion auch als Anionen- oder Kationen- -Akzeptor oder -Donator(oder-Emitter)-Kammern bezeichnet.

Gemäß einer ersten Ausführungsform enthält die erfindungsgemäße Vorrichtung drei Elektrolytbereiche, die umfassen: (A) einen Bereich, der mit der Einstell-Lösung im wesentlichen Anionen (insbesondere OH-Ionen) austauschen kann (bei pH-Systemen: Basenregulator), (B) einen Bereich, der mit der Einstell-Lösung im wesentlichen Kationen (insbesondere H-Ionen) austauschen kann (bei pH-Systemen: Säurenregulator), und (C) einen Bereich, der mit der Einstell-Lösung beliebig Kationen und Anionen austauschen kann (bei pH-Systemen: sog. Neutralphase). Die chemische Zusammensetzung der Lösungen in den Bereichen ist ihrer jeweiligen Funktion angepaßt. Die Elektrolyte können insbesondere schwach salzige Lösungen, destilliertes Wasser, Säuren, Basen oder angefeuchtete Salze umfassen.

Zur pH-Einstellung wird der Säuren- bzw. Basenregulator jeweils mit der Neutralphase betrieben, um das System sauer bzw. basisch einzustellen. Im Einzelnen finden die folgenden Ionentransporte statt:
a) Regelung in Richtung geringerer pH-Werte (Ansäuerung der Einstell-Lösung): Die Elektrode des Säurenregulators wird als Anode und die der Neutralphase als Kathode betrieben. Aus dem Säurenregulator fließen Protonen in die Einstell-Lösung, dafür fließen Kationen der Lösung in die Neutralphase. Die Anionen der Neutralphase bewegen sich durch die Einstell-Lösung in den Säurenregulator und sind deshalb kaum wirksam.
b) Regelung in Richtung höhere pH-Werte (Alkalisierung): Hier findet der analoge Prozess mit Hydroxylionen, d.h., jeweils mit umgekehrtem Vorzeichen statt.

Die Ionenkonzentration oder Leitfähigkeit kann verändert werden, indem entweder die Säuren- und Basenregulatoren (Reduzierung der Leitfähigkeit) oder zwei Neutralphasen (Erhöhung der Leitfähigkeit) jeweils miteinander oder mit einer weiteren Elektrode in der Einstell-Lösung betrieben werden.

Die Neutralphase ist für einen Betrieb mit Stromumkehr eingerichtet. Um das "Vergiften" der Einstell-Lösung innerhalb der Einstellzeiten wirksam zu unterbinden, können ein laufender Austausch des Elektrolyts mindestens in der Neutralphase oder Mittel zur Reduzierung der Ionenbeweglichkeit (z. B. konvektionsbehindernde Zusätze wie Gele o. dgl., hochkonzentrierte Elektrolyte oder feuchte Salze) in der Neutralphase vorgesehen sein. Im Fall der Verwendung eines angefeuchteten Salzes wird die Feldstärke auf ein Minimum reduziert, so daß sich die Ionen nur mit einer geringen Geschwindigkeit bewegen.

Alternativ umfaßt die erfindungsgemäße Vorrichtung zur Vermeidung einer Stromumkehr und somit eines Transports von Redoxprodukten von Elektroden in die Einstell-Lösung vier Elektrolytbereiche, wobei zwei Neutralphasen vorgesehen sind.

Die Erfindung ist nicht auf die Realisierung von drei oder vier Elektrolytbereichen beschränkt, sondern mit beliebig vielen Elektrolytbereichen ausführbar.

Gemäß bevorzugter Ausführungsformen der Erfindung werden die Elektrolytbereiche jeweils in Paaren oder sämtlich mit gemeinsamen Haltemitteln versehen. Je nach Anwendungsfall bedeutet die gemeinsame Halterung in Paaren die gemeinsame Halterung eines Säuren- oder Basenregulators jeweils mit einer Neutralphase (pH-Einstellung) oder die gemeinsame Halterung eines Säuren- und eines Basenregulator oder der Neutralphasen (Ioneneinstellung).

Die Haltemittel können durch einen Träger gebildet werden, an dem die Elektrolytbereiche voneinander beabstandet jeweils mit einem Ende angebracht sind. Die Haltemittel können auch durch ein Bauelement gebildet werden, in das die Elektrolytbereiche aneinandergrenzend integriert sind.

Die definierte relative Positionierung an den Haltemitteln ergibt erstens eine einfache, gemeinsame Handhabbarkeit (insbesondere Eintauchbarkeit in die Einstell-Lösung) der gehalterten Elektrolytbereiche und zweitens einen beliebig wählbaren, aber konstanten Abstand und somit konstante Stromwege zwischen den gemeinsam gehalterten Kammern.

Eine Verkürzung des Stromweges ist möglich, indem die Elektrolytbereiche jeweils in Paaren oder sämtlich aneinandergrenzend angeordnet werden. Dies ermöglicht, daß diffusionsmindernde Mittel zueinander benachbart anordenbar sind. Diffusionsmindernde Mittel sind zueinander benachbart, wenn die seitliche Berandung eines diffusionsmindernden Mittels entweder direkt die seitliche Berandung eines weiteren diffusionsmindernden Mittel berührt oder von dieser einen Abstand aufweist, der wesentlich geringer (z. B. Faktor 0,5 oder weniger) ist als eine charakteristische Größe des Einstellvolumens (z. B. Gefäßdurchmesser).

Mit diesen anwendungsabhängig realisierten Maßnahmen werden die folgenden Voraussetzungen für einen Regelkreis optimiert. Erstens erfolgt die Systembeeinflussung möglichst reproduzierbar, da die Stromwege konstant sind. Zweitens erfolgt die Systembeeinflussung genügend schnell, da die Stromwege minimiert sind.

Gemäß einer besonderen Ausführungsform der Erfindung ist die Einstell-Lösung während der Einstellung misch- oder rührbar. Die Durchmischung kann entweder aktiv durch ein Rührmittel oder passiv (insbesondere bei kleinen Volumen) durch Diffusion erfolgen. Als Rührmittel sind sowohl separate Rührwerke (z. B. magnetischer Rührer) oder das pH-Einstellgerät selbst verwendbar.

In mindestens einem der Elektrolytbereiche können Mittel zur Reduzierung oder Beeinflussung der Ionenbeweglichkeit vorgesehen sein. Neben diffusionsmindernden Materialien oder Viskositätserhöhern können diffusionsmindernde Strukturen (insbesondere zur Bildung einer Abfolge gerührter, gut durchmischter und ungerührter, diffusionsberuhigter Zonen), die Verwendung mehrerer Elektroden (insbesondere mit geeigneter Anordnung z.B. teilisoliert weit bzw. nahe in Bezug auf das Diaphragma angeordnet) pro Elektrolytbereich und Umwälzsysteme vorgesehen sein.

Mit der Erfindung werden insbesondere kompakte, feedbackkontrollierbare pH-Einstellgeräte (z. B. in Form von pH- Elektroden) oder -verfahren geschaffen, bei denen gemeinsam gehalterte Elektrolytkammern zusammen oder in trennbaren Teilgruppen vorgesehen sind und die das Volumen nicht oder durch eine jeweils bestimmbare Verdrängung in reproduzierbarer Weise ändern, die (bei konstantem Volumen) die Leitfähigkeit eines Einstellbereiches nicht ändern, die bei Bedarf die qualitative Zusammensetzung der einzustellenden Lösung konstant halten oder gezielt einstellen und ggf. entstehende Elektrodenreaktionsprodukte zurückhalten, oder bei denen die zu kalibrierende Lösung in ihrer chemischen Zusammensetzung nicht bekannt sein muß und bei der Regelung unberücksichtigt bleiben kann.

Ein erfindungsgemäßes Verfahren zur amperometrischen Einstellung der Ionenkonzentration einer Einstell-Lösung umfaßt die Schritte Befüllen eines Systems zur amperometrischen Ionenkonzentrations-Einstellung, das mindestens drei kammerförmige Elektrolytbereiche aufweist, die jeweils eine Steuerelektrode und diffusionsmindernde Mittel enthalten, mit einer Vielzahl von Elektrolytlösungen, simultanes Verbinden der diffusionsmindernden Mittel der Elektrolytbereiche mit der Einstell-Lösung, und Ansteuern jedes Elektrolytbereiches mit einem separaten Steuerstrom, wobei bei Stromfluß durch die Steuerelektroden Ionen von den Elektrolytlösungen über die diffusionsmindernden Mittel derart in die Einstell-Lösung transportiert werden, daß sich deren Ionenkonzentration ändert.

Eine Regelung nach dem erfindungsgemäßen Verfahren erfolgt, indem eine Regelabweichung vom gewünschten Ionenkonzentrations- oder pH-Wert mittels einer oder mehrerer Sensormittel gemessen wird und anschließend auf amperometrischen Wege kompensiert wird. Die Sensormittel können Ionensensoren, pH-Elektroden oder Meßmittel umfassen, die den Istwert indirekt durch Messung eines Istwert-abhängigen Parameters der Einstell-Lösung z. B. über eine optisch-spektroskopische Messung (z. B. Absorption) erfassen. Die Sensormittel besitzen vorzugsweise eine kurze Ansprechzeit. pH-Elektroden auf FET-Basis mit Ansprechzeiten im Bereich von 1 s sind daher besonders gut geeignet.

Die folgenden Eigenschaften und Vorteile sind durch die Erfindung, nicht jedoch durch bisher bekannte Systeme realisierbar: Die Ionenzusammensetzung (z. B. der pH-Wert) ist schnell (ms- bis min-Bereich, in Ausnahmen Stunden) und hinreichend genau (1/10 bis zu 1/100 pH und weniger) einstellbar. Die Leitfähigkeit der Lösung ist regelbar.

Es sind beliebige Volumina (ml bis µl oder darunter) lediglich durch Herstellen eines Flüssigkeitskontaktes mit den diffusionsmindernden Mitteln oder partielles Eintauchen einstellbar. Das Lösungsvolumen wird durch den Einstellvorgang nicht oder nur geringfügig verändert. Das System ist auch als Durchflußsystem betreibbar.

Redoxvorgänge an den Elektroden werden vom Einstellen der Ionenkonzentration entkoppelt. Der Einstellbereich wird über Phasengrenzen mit den Elektrolytbereichen verbunden. Der Einstellbereich enthält somit - außer ggf. Sensorelektroden - keine Elektroden. Die in ihrer Zusammensetzung ggf. unbekannte, einzustellende Lösung (Einstell-Lösung) wird durch den Einstellvorgang nicht verbraucht oder mit Redoxprodukten vergiftet. Störende Redoxprodukte an den Elektroden werden allgemein durch eine ausreichende Abgrenzung und bei Vorrichtungen mit vier und mehr Kammer durch die während des Betriebs unveränderte Polarität der Kammern von der Einstell-Lösung ferngehalten.

Der Aufbau eines leicht handhabbaren und elektronisch regelbaren, ggf. programmierbaren Systems ist möglich, das insbesondere in beliebigen Gefäßen benutzt werden kann. Das System ist langzeitstabil und, zumindest in seinen wesentlichen Teilen, wiederverwendbar und ggf. austauschbar. Eine Kompatibilität mit herkömmlichen Laborsystemen beliebiger Geometrie (z. B. an sog. "Eppendorf-Tubes") oder elektrischer Funktion (z. B. an pH-Meßgeräte, Spannungsmesser o.ä.) ist möglich. Das System kann z. B. in Stiftform mit Unterkammern ggf. in Kombination mit einem Regelgefäß oder extrem miniaturisiert gebildet sein. Es sind kommerziell verfügbare pH-Elektrodenanschlüsse bzw. auch komplette Sensorsysteme (FET-Elektroden, Glaselektroden etc.) zur Bildung eines Regelkreises (pH-Wert-Erfassung) nutzbar. Das System ist regenerierbar. Wie bei der konventionellen pH-Säure-Basen-Einstellung ist eine analoge Aufzeichnung der Regelprozedur entsprechend einem Titrationsprotokoll möglich. Es sind feste pH-Werte einstellbar oder pH-Programme, wie pH-Sprünge, pH-Treppen, Verläufe mit linearen, exponentiellen oder anderen zeitlichen Anstiegen und Abfällen, oder auch iterative Verläufe und Verläufe mit wiederholbaren Charakteristiken, durchfahrbar.

Die Ionenkonzentrationseinstellung erfolgt nicht über eine chemische Reaktion, sondern über einen Stofftransport in den Einstell-bereich. Der Abstand zwischen den Elektrolytbereichen mit den (Steuer-)Elektroden kann beliebig auf einen konstanten Wert eingestellt werden, ohne daß die Fähigkeit zur pH-Regelung verloren geht. Dies ermöglicht die kompakte Bauform mit aneinandergrenzenden Elektrolytbereichen oder auch pH-Geräte mit trennbaren, kompakten Teil-Systemen jeweils mit aneinandergrenzenden Elektrolytbereichen.

Die Vorrichtung kann als elektronischer Puffer betrachtet werden, bei dem die sonst auf chemischem Wege erreichte Pufferwirkung elektronisch geregelt wird, was nicht ausschließt, daß auch gepufferte Lösungen eingestellt werden können.

Spezielle Ausführungsformen der Erfindung werden im folgenden unter Bezug auf die beigefügten Zeichnungen erläutert. Es zeigen:
Fig. 1: eine erste Ausführungsform einer erfindungsgemäßen Vorrichtung;
Fig. 2: ein Beispiel einer Beschaltung einer erfindungsgemäßen Vorrichtung;
Fig. 3: eine weitere Ausführungsform einer erfindungsgemäßen Vorrichtung;
Fig. 4: eine weitere Ausführungsform einer erfindungsgemäßen Vorrichtung;
Fig. 5: eine weitere Ausführungsform einer erfindungsgemäßen Vorrichtung;
Fig. 6: eine weitere Ausführungsform einer erfindungsgemäßen Vorrichtung für miniaturisierte Anwendungen;
Fig. 7: eine weitere Ausführungsform einer erfindungsgemäßen Vorrichtung für miniaturisierte Anwendungen;
Fig. 8: Elektrolytbereichkonfigurationen, die zur verbesserten Diffusionsverminderung und Elektrolytregenerierung vorgesehen sind;
Fig. 9: eine Anordnung zur Zubereitung einer Elektrolytkammerbefüllung für erfindungsgemäße Einstellgeräte;
Fign. 10 bis 13: Kurvendarstellungen von Beispielen erfindungsgemäßer pH-Wert-Regelungen; und
Fig. 14: eine Darstellung der Abhängigkeit charakteristischer Einstellzeiten vom Einstellvolumen und von der Einstell-Lösung.

Die folgenden Beispiele werden unter Bezug auf die pH-Einstellung beschrieben, sind aber bei gleichem Aufbau durch entsprechend geändertes Betreiben der Elektrolytkammern auch zur Ionenkonzentrations-Einstellung verwendbar.

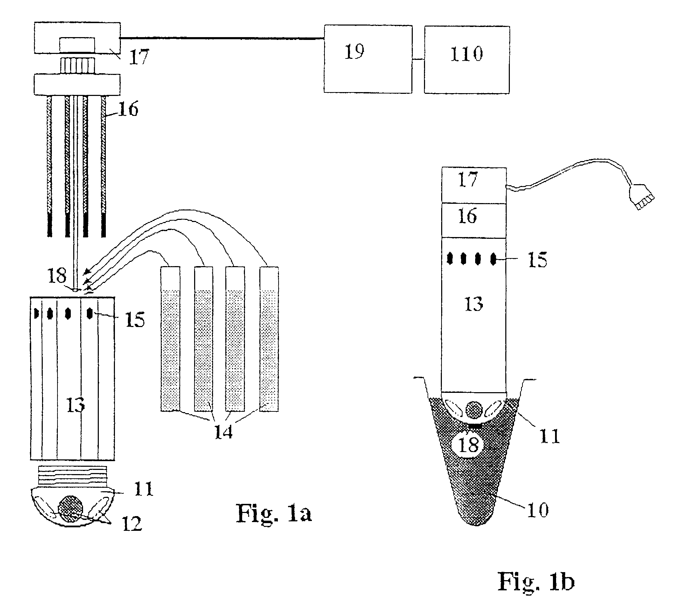

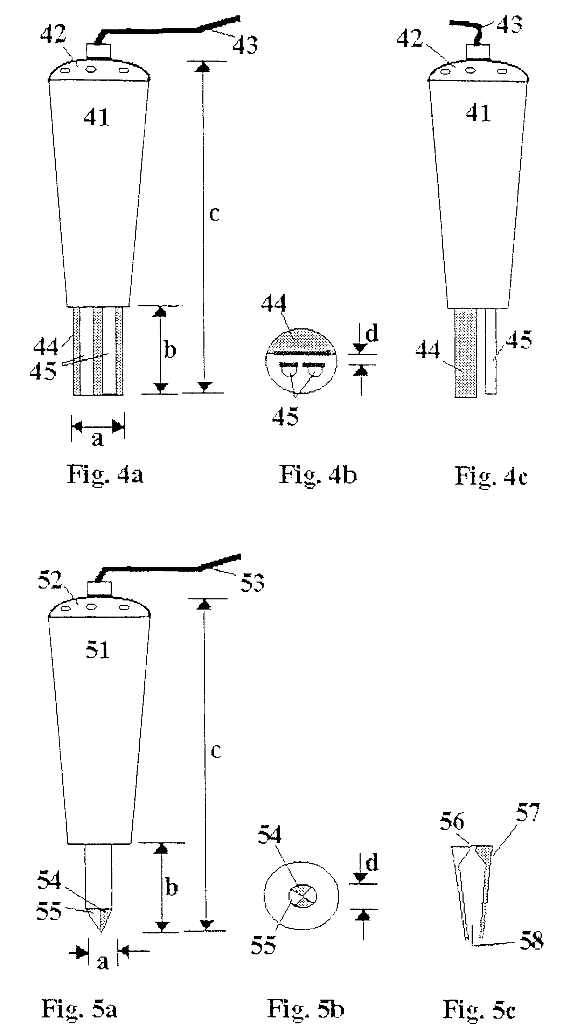

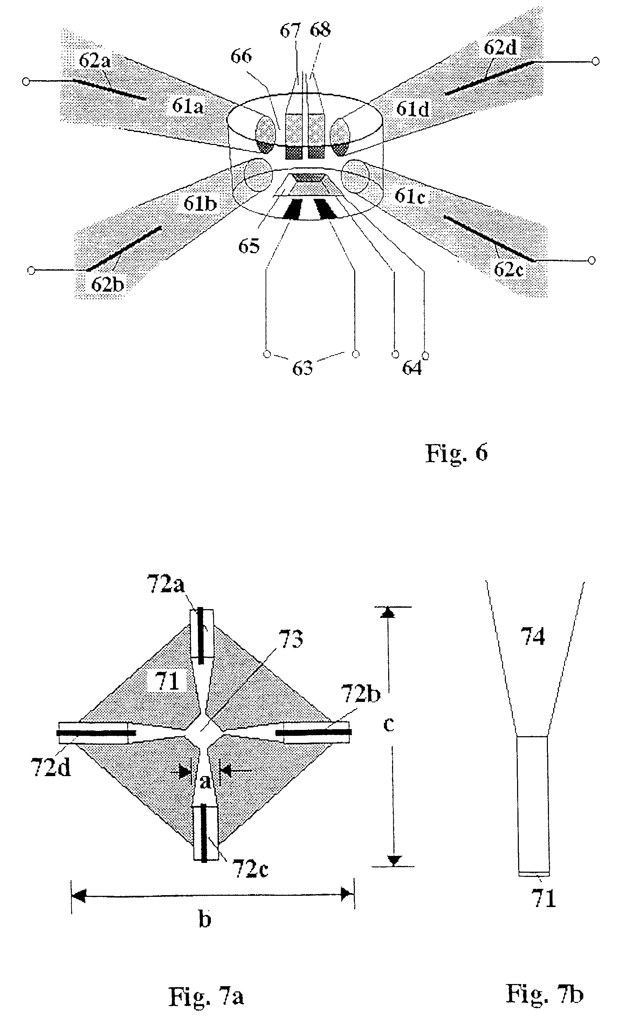

Aufgrund der Abhängigkeit der Regeleigenschaften vom Einstellvolumen ist es zweckmäßig, Ausführungsbeispiele erfindungsgemäßer Vorrichtungen unter Bezug auf drei Größenbereiche des Einstellvolumens zu erläutern. Dies dient lediglich der Klarheit und nicht einer Einschränkung von Merkmalen auf die jeweils genannten Ausführungsbeispiele. Die Größenbereiche sind:
Bereich 1: Volumina größer 10 ml (Fign. 1 bis 4),
Bereich 2: Volumina zwischen 0,1 ml und 10 ml (Fig. 5), und
Bereich 3: Volumina < 0.1 ml bzw. in mikroskopisch kleinen Systemen (Fig. 6, 7)

Während Vorrichtungen zum Einsatz in den Bereichen 1 und 2 in der Regel mit konventionellen Mitteln der Fertigung (Fräsen, Bohren, Spritzen etc.) gefertigt werden, finden bei Bereich 3 vor allem Mikrostrukturierungstechniken mit einer Auflösung im µm-Bereich oder darunter, insbesondere halbleitertechnologische Verfahren, Anwendung.

In Fig. 1 ist beispielhaft ein modularer, kompakter pH-Regelstift in Explosionsdarstellung (Fig. 1a) und als zusammengesetztes System (Fig. 1b) schematisch gezeigt.

Der Stift umfaßt eine Sensor- und Diaphragmenkappe 11 (im folgenden: Kappe 11), ein Elektrolytkammermodul 13, Elektrolyt-Patronen 14, Elektroden 16, und ein Interfacemodul 17, das an (ggf. programmierbare) Konstantstromquellen 19 bzw. eine Mikroprozessor- oder Computersteuerung 110 anschließbar ist. Die erfindungsgemäß vorgesehenen Elektrolytbereiche umfassen Teile der Kappe 11, die Patronen 14 und die Elektroden 16. Als diffusionsmindernde Mittel sind die Diaphragmen 12 vorgesehen. Die Elektrolyt-Patronen 14 sind nur schematisch dargestellt. Sie besitzen an ihrem in Betriebsposition unteren Ende (nicht dargestellte) Mittel zur Herstellung eines Flüssigkeitskontaktes mit den diffusionsmindernden Mitteln. So kann das untere Ende insbesondere an die in geeigneter Weise gestaltete Innenform der Kappe 11, ggf. unter Verwendung von flüssigkeitsdurchlässigen Trennelementen, angepaßt sein.

Die Elektrolytbereiche können bei allen Ausführungsformen wie folgt befüllt sein. Zwei Kammern bilden die Säure- bzw. Basenregulatoren, die mit einer Säure bzw. einer Base gefüllt werden, deren Konzentration so ausgewählt ist, das die jeweilige Elektrolytfunktion erfüllbar ist. Dementsprechend kann die Konzentration je nach Anwendung stark variieren und bis auf das Fehlen eines sauren bzw. basischen Charakters absinken. Beide Regulatoren können beispielsweise mit Wasser gefüllt sein. Zwei weitere Kammern bilden die Neutralphasen, die mit einem Elektrolyten einer derartigen Konzentration gefüllt werden, daß die Donatorfunktion der Neutralphasen erfüllbar ist und ggf. in den Neutralphasen Puffer ersetzt werden muß. Die Neutralphasen können z. B. mit einem hochkonzentrierten Puffer gefüllt sein.

Um z. B. eine bekannte Pufferlösung (z. B. 0.1 Mol Tris/HCl-Lösung) einzustellen, werden die Neutralphasen mit hochkonzentrierten Puffer (z. B. mit salzförmigem Tris-Puffer mit konzentrierter Salzsäure, pH = 7) gefüllt. Der Basenregulator enthält 0.02 M NaOH-Lösung. Der Säurenregulator enthält 0.02 M HNO₃-Lösung. Um z. B. eine unbekannte Lösung einzustellen, werden die Neutralphasen mit hochkonzentrierter NaNO₃-Lösung, der Basenregulator mit 0.01 M NaOH-Lösung und der Säurenregulator mit 0.01 M HNO₃-Lösung gefüllt. Bei einer schwach puffernden, ansonsten unbekannten Lösung, wird wie im letzten Fall verfahren, dies jedoch mit einer verdünnteren Neutralphase (z. B. 1 M NaNO₃-Lösung). Weitere Beispiele sind unten dargestellt.

Das Elektrolytkammermodul 13 besteht aus den vier Kammern, in die mit den verschiedenen Elektrolyten befüllte Patronen 14 eingesetzt werden. Bei Stromfluß an den Elektroden 16 entstehende Gase entweichen über die Entgasungsöffnungen 15. Die Diaphragmen 12, die jeweils mit einer Patrone 14 verbunden sind, stellen bei Betrieb die Phasengrenze zwischen den Elektrolytkammern und der Lösung dar. Gegebenenfalls sind in die Patronen 14 noch weitere Diffusionsbarrieren oder Trennelemente wie Membranen eingefügt, um den Raum, der mit den Elektroden 16 in direktem Kontakt steht, noch weiter von der Lösung 10 abzutrennen.

Im 4-Kammerstift sind die folgenden 3 Membrankombinationen anwendbar:
(i) Verwendung gleichartiger Diaphragmen oder Diffusionsbehinderer an allen Kammern;
(ii) Verwendung einer Kationenaustauschermembran an der Säurekammer (Säurenregulator), einer Anionenaustauschermembran an der Basenkammer (Basenregulator) und einer unter (i) genannten Diffussionsminderung an den Neutralkammern (Neutralphase);
(iii) Verwendung jeweils einer Kationen- und einer Anionenaustauschermembran am Säurenregulator und der ersten Neutralphase, sowie jeweils einer Anionen- und einer Kationenaustauschermembran am Basenregulator bzw. und der zweiten Neutralphase. Weitere Kombinationen sind möglich.

Auf das Elektrolytkammermodul 13 ist das Elektrodenmodul, hier mit vier Elektroden 16 (teilweise isoliert) und einem pH-Sensor 18 aufgesetzt, wobei die Elektroden in die Elektrolytkammern (Patronen 14) eintauchen und der pH-Sensor 18 durch eine zentrale Öffnung bis in die Kappe 11 hineinreicht und in direkten Kontakt mit der Lösung gebracht werden kann. Er kann jedoch auch an der Außenwand angebracht bzw. anderweitig integriert sein oder durch einen Leitfähigkeitssensor komplettiert werden. Zweckmäßig ist es, temperaturkompensierte Sensoren zu verwenden. Das Interfacemodul 17 stellt die elektrischen Kontakte zur Steuerelektronik her und enthält eine Schaltung, z.B. ein Diodennetz-werk, die eine Falsch-Polung ausschließt. Neben der Mikroprozessor- oder Computersteuerung 110 wird der Stift über eine oder mehrere Konstantstromquellen 19 mit den notwendigen Strömen versorgt.

Bei Betrieb muß allein die Kappe 11 mit der Einstell-Lösung 10 in Verbindung stehen (siehe Fig. 1b). Alle anderen Teile können, müssen aber nicht in die zu einzustellende Lösung eintauchen. Die Kappe besitzt einen Durchmesser, der an die Dimension des Einstell-Bereiches angepaßt ist. Für die Anpassung von Standardbauteilen (z. B. Abdeckungen) sollte der Durchmesser kleiner 15 mm sein.

Die Elektroden 16, die Elektrolytpatronen 14 und die Kappe 11 sind als Verbrauchsmaterialien schnell und einfach auswechselbar. Die Elektroden 16 können aus Kohle (z. B. ElektrodenSinterkohle), leitfähigen Kunststoffen, Platin, Gold, Edelstahl o. dgl. bestehen oder entsprechende Beschichtungen tragen. Die Elektroden 16 können drahtförmig oder flächig ausgeführt sein. Die Elektroden 16 können auf der Innenwandung der Patronen z. B. als Beschichtung integriert sein. Austauschbare Lösungspatronen, die mit einer Standardlösungen mit vorgegebener Ionenzusammensetzung vorgefüllt sein können, werden z. B. in der medizinische Diagnostik und bei pharmakologischen Anwendungen, aber auch bei Wasserentkalkungssysteme verwendet.

Die Kappe kann auch als flache Scheibe ausgeführt sein, die sich vor allem für den Einsatz in sehr kleinen Volumina (siehe unten) eignet, da diese Ausführung sehr stark miniaturisiert werden kann und nur auf den Meniskus der Lösung aufgesetzt werden muß. Dadurch entsteht so gut wie keine Lösungsverdrängung bei guten Regeleigenschaften. Ferner ist die Kappe leicht abspülbar, was für den Routine-Laboreinsatz vorteilhaft ist.

Mit dem dargestellten 4-Kammerstift können die meisten Anforderungen im Laborbetrieb erfüllt werden. Es sind aber auch sowohl abgerüstete als auch erweiterte Varianten für spezielle Anwendungen denkbar. Das dargestellte 4-Kammer-Stiftsystem hat den Vorteil, daß alle aus der Lösung entzogenen Komponenten im Stift verbleiben. Bei weiterer Benutzung werden so die Folgelösungen nicht kontaminiert. Dies gilt insbesondere für die Neutralphasen, die bei der 4-Kammer-Ausführung jeweils als Kathode oder Anode, aber nicht wechselweise als Kathode und Anode betrieben werden. Falls eine Kontamination mit Anionen oder Kationen einer Vorläuferlösung keine Rolle spielt oder andere Maßnahmen zur Verhinderung einer Kontamination getroffen werden, kann zur pH-Regelung ein 3-Kammerstift genutzt werden. Er besteht aus einem Anionenkollektor, einem Kationenkollektor und einem kombinierten Anionen/Kationenemitter (gemeinsame Neutralphase).

Ferner kann auf einen Leitfähigkeitssensor verzichtet werden, wenn die Leitfähigkeit nicht von Interesse ist.

Die Elektroden haben keinen direkten Kontakt mit der Einstell-Lösung und mögliche Reaktionsprodukte an ihnen (z.B. Radikale) können nicht oder nur in geringster Konzentration in die Lösung 10 gelangen.

Das Befüllen der Kammern erfolgt durch geeignete Zufuhrmittel (Pumpe, Spritze o. dgl.). Die Kammern der Elektrolytbereiche können aber auch selbst kolbenartig aufgebaut sein, so daß die Lösungen wie in eine Spritze aufgesaugt werden können.

Die Kappe 11, das Elektrolytkammermodul 13 und Teile des Interfacemoduls 17 bilden Haltemittel, mit denen die Elektrolytbereiche gemeinsam gehaltert werden und gehandhabt werden können. Die Diaphragmen sind in unmittelbarer Nachbarschaft zueinander angeordnet, so daß die Stromwege minimiert werden.

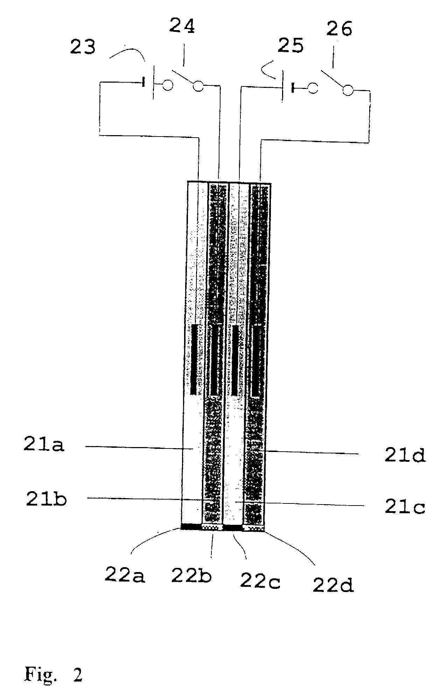

In Fig. 2 ist eine Beschaltung einer erfindungsgemäßen Vorrichtung (schematisch dargestellt) beispielhaft angegeben. Die vier Elektrolytkammern 21a-d sind zur pH-Einstellung mit NaOH (21a), NaNO₃ (21b), H₂SO₄ (21c) und NaCl (21d) gefüllt. Mit den Spannungsquellen 23 und 25 sind die Elektroden der Kammern 21a und 21d als Kathoden und die der Kammern 21b und 21c als Anoden geschaltet. Die Diffusionsbarrieren umfassen einen Anionentauscher 22a, einen Kationentauscher 22c und Dialysemembranen 22b, 22d. Die verwendeten Ionentauschermembranen bzw. Dialysemembranen besitzen eine Dicke von rd. 0,5 mm bzw. 0,1 mm. Es sind jedoch auch andere Dicken wählbar. Soll der pH-Wert sauer eingestellt werden, so wird der Schalter 24 geschlossen. Soll der pH-Wert basisch eingestellt werden, so wird der Schalter 26 geschlossen. Andere Beschaltungsvarianten und Befüllungen werden je nach den Anforderungen durch den Fachmann auswählbar sein. Der Betrieb erfolgt bei Spannungswerten, die in Abhängigkeit vom Einstell-Volumen, der Leitfähigkeit und der Bauart der Vorrichtung geeignet ausgewählt werden. Für die o. a. Bereiche 2 und 3 kann die Spannung kleiner als 100 V, vorzugsweise kleiner als 42 V sein, aber auch höher als 100 V liegen. Ein wichtiger Vorteil für die Anwendung im Laborbetrieb ist die Möglichkeit, die erfindungsgemäße Vorrichtung mit ungefährlichen Kleinspannungen zu betreiben. Bei den dargestellten Beispielen wurde mit Konstantstromquellen gearbeitet (Spannungen je nach Betriebsphase rd. 30V bis 60V).

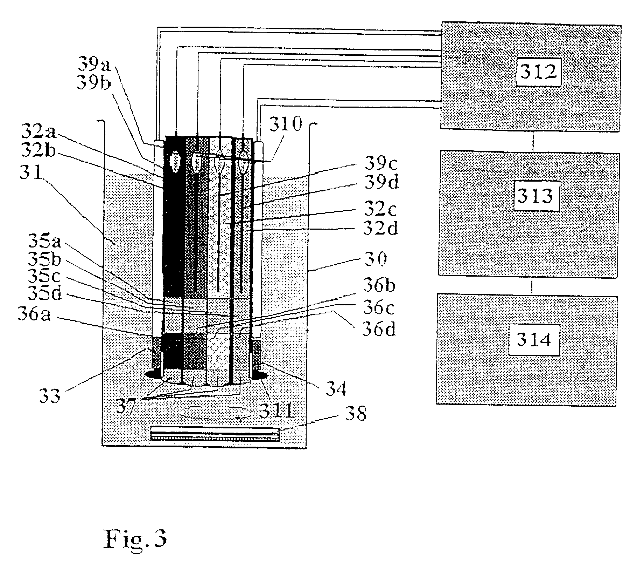

Ein weiteres Ausführungsbeispiel zum o. a. Bereich 1 ist in schematisch als Schnittansicht in Fig. 3 dargestellt. Ein kompakter Stift zur Regelung des pH-Wertes der Lösung 31 befindet sich in einem Gefäß, das hier durch das Becherglas 30 gebildet wird. Der Stift ist als 4-Kammersystem ausgeführt und enthält die folgenden Elemente. Es sind vier Steuerelektroden 39 a-d zur Bildung der Ionenströme vorgesehen. Davon sind zwei als Anionen- und Kationenkollektor, die anderen als Anionen- und Kationenemitter geschaltet. Die Ionenströme durchlaufen die verschiedenen Kompartimente des Stiftes 32 a-d, 35 a-d und 36 a-d, die Diaphragmen oder Membranen 37 und die zu regulierende Lösung 31. Die Kompartimente enthalten weitere Diffusionsbarrieren 35 a-d und Entgasungsöffnungen 310. Die Kompartimente sind mit mindestens 2 verschiedenen Elektrolytlösungen gefüllt. Die pH-Elektrode 34 und Leitfähigkeitssensor 33 dienen der Erfassung der jeweiligen Istwerte bei der Regelung des pH-Wertes oder der Leitfähigkeit.

Unter Umständen müssen die Sensoren gegen das Regelfeld abgeschirmt werden (hier angedeutet durch den Ring 311), oder es wird alternierend (messen - regeln) gearbeitet. Zweckmäßigerweise wird die Lösung 31 durchmischt (z. B. Magnetrührer 38). Der Regelstift ist mit der elektronischen Regelstrecke 312, dem Rechnerinterface 313 und dem Rechner oder Mikroprozessor 314 verbunden. Das System kann jedoch auch mit einem kommerziellen pH-Meß- und Steuergerät verschaltet werden. Auf diese Weise können komplizierte pH-Funktionen vorgegeben werden (auch Treppen, Sprünge etc.). Weiterhin können komplizierte pH-Programme durchlaufen und gleichzeitig die zur Änderung des pH-Wertes erforderlichen Ionenströme registriert und ausgewertet werden (ähnlich den Verfahren mit Titrationskurven).

Von dem Gesamtsystem müssen bei Betrieb nur die Diaphragmen und die Sensoren in die Lösung 31 eintauchen, so daß entsprechende Stifte in flächiger Ausführung der genannten Elemente nur auf Lösungen, Gele etc. aufgesetzt werden müssen, um deren pH zu regeln.

In Fig. 3 sind die Elektrolytkammern aus Übersichtlichkeitsgründen nebeneinander dargestellt. In der Praxis werden sie jedoch in geeigneter, platzsparender Weise in einen äußeren Mantel integriert, der das Haltemittel bildet. Die Diaphragmen 37 können durch eine einstückige Membran gebildet werden, die simultan die benachbarten Ausgänge der Elektrolytbereiche überdeckt und jeweils an den Trennwänden zwischen den Elektrolytbereichen befestigt ist.

Ein weiteres Ausführungsbeispiel zum o. a. Bereich 1 ist in den Fign. 4a-c dargestellt. Dieses Beispiel bezieht sich auf einen 3-Kammer-Stift.

Die Fign. 4a und 4c zeigen zwei Seitenansichten (jeweils um 90 Grad versetzt) eines erfindungsgemäßen pH-Regelungssystems. Das Griffteil 41, das drei Kammern (Basen-, Säurenregulatoren und Neutralkammer) enthält, ist auf seiner Oberseite durch die Kappe 42 abgeschlossen. An der Kappe 42 sind drei Elektroden angebracht (nicht dargestellt), die jeweils in die Kammern im Griffteil 41 ragen. Die Elektroden sind über das Zuführungskabel 43, bestehend aus den Elektrodenzuleitungen und der pH-Elektrodenverdrahtung (pH-Elektrode nicht gezeigt), ansteuerbar. Die Kappe 42 ist mit Belüftungslöchern versehen, die den Kammern zugeordnet sind. Die Kappe ist abnehmbar, so daß das System beschickt werden kann.

An der Unterseite des Griffteils 41 ragen Teile der Elektrolytbereiche 44, 45 hervor, die zum Kontakt mit der Einstell-Lösung eingerichtet sind (Draufsicht siehe Figur 4b). Die Säuren- bzw. Basenregulatoren 45 bilden jeweils ein rohrförmiges Bauteil, das auf der der Neutralphase 44 zugewandten Seite als diffusionsminderndes Mittel ein Diaphragma aufweist. Die Neutralphase 44 ist über ein Diaphragma zu den Säuren- bzw. Basenregulatoren 45 hin abgeschlossen. Die jeweils den Bereichen 44, 45 zugeordneten Diaphragmen besitzen einen Abstand d, der wesentlich geringer (z. B. Faktor 0,5) als eine charakteristische Größe des Einstellvolumens (z. B. Gefäßdurchmesser) ist. Bei Betrieb bildet sich in der Einstell-Lösung über den Abstand d ein entsprechend kurzer Stromweg aus. Das System kann auch mit drei Diaphragmenzylindern oder anderen Geometrien ausgeführt werden. Die Neutralphase 44 kann auch in zwei Teilkammern unterteilt sein, so daß ein 4-Kammer-Stift realisiert wird.

Je nach Einstell-Volumen liegen die Abmessung a bei 10 mm bis zu 500 mm, die Abmessung b bei 10 mm bis zu 1000 mm und die Abmessung c bei 100 mm bis zu mehreren Metern. Der Abstand d variiert zwischen 1 mm und 100 mm.

Ein Ausführungsbeispiel zum o. a. Bereich 2 ist in den Fign. 5a-c dargestellt.

Bei der Seitenansicht gemäß Fig. 5a (Stift für Volumina von 0,1 ml bis 10 ml) bezeichnen 51 ein Griffteil, das vier Kammern (Basen-, Säurenregulatoren und Neutralkammern) enthält, 52 eine Kappe bzw. Elektrodenhalterung und 53 eine Kabelzuführung. An der Unterseite des Griffteils 51 ragt ein längliches Führungselement vor, in das Verbindungskanäle zwischen jeder Elektrolytkammer und dem zugehörigen Diaphragma integriert sind und das in den pyramidenförmigen Diaphragmenkopf 54, 55 mündet.

Die Dimension des Diaphragmenkopfes 54, 55 ist an das Einstell-Volumen angepaßt minimiert. Der Diaphragmenkopf 54, 55 besteht aus vier getrennten, eine Pyramidenform bildenden Diaphragmen. 54 und 55 bezeichnen verschiedenen Diaphragmentypen (z.B. Dialysemembranen und Ionenaustauschermembranen). Es genügt, wenn bei Betrieb der erfindungsgemäßen Vorrichtung die Spitze, die durch den Diaphragmenkopf 54, 55 gebildet wird, in die Lösung eintaucht. In Fig. 5b ist eine Draufsicht auf das Griffteil mit dem Diaphragmenkopf 54, 55 von unten gezeigt. Es lassen sich die vier getrennten Diaphragmen erkennen, von denen zwei insbesondere bei der pH-Regelung zur Einspeisung von Protonen und Hydroxylionen vorgesehen sind. Die übrigen Diaphragmen bilden die Phasengrenzen zu den Neutralphasen.

Die typischen Abmessungen von a liegen zwischen 10 mm bis zu 1 mm, von b zwischen 100 mm und 5 mm und von c zwischen 300 mm und 20 mm. Die Abmessung d wird typischerweise im Bereich 15 mm bis 1 mm ausgewählt.

Alternativ zu der pyramidalen oder zugespitzten Ausführung kann die einzustellende Lösung auch über einen konventionellen Hebemechanismus (Öffnung 56) in eine Hohlspitze 58 gemäß Fig. 5c gezogen werden, die innen 3 oder 4 Diaphragmenmembranen 57 (hier sind nur zwei gezeigt) aufweist. Die Durchmischung der Einstell-Lösung kann über Vibration oder bei sehr kleinen Volumina über Diffusion erfolgen.

Die Anwendung des amperometrischen Prinzips läßt Verkleinerungen von Vorrichtungs-Komponenten bis auf µm-Größe zu. Allgemein kann auf einen Teil oder alle der Diaphragmen verzichtet werden. An die Stelle der Diaphragmen treten dann entsprechend gestaltete diffusionshemmende Kanäle/Öffnungen. Die Funktion der diffusionsmindernden Mittel (Diaphragmenkopf oder Kappe gemäß Fig. 1) übernehmen drei oder mehr Kapillaren (z.B. Glaskapillaren mit einem Öffnungsdurchmesser im um-Bereich oder darunter). Die starke Diffusionsbehinderung durch die Kapillaren erlaubt es, Diaphragmen völlig wegzulassen. Derartige Systeme können in Verbindung mit einem FET-Protonensensor (z.B. einer Meßgröße von 50 µm x 50 µm) als Kapillarkomplex ausgeführt werden, der in einen Lösungstropfen eingeführt wird und dessen pH-Wert erfaßt und regelt. Bevorzugte Einsatzgebiete dieser Ausführung sind die Zellbiologie, insbesondere die auf die Manipulation von Eizellen, Spermien etc. bezogenen Techniken sowie gentechnische Aufgabenfelder. Das System eignet sich auch zur Erzeugung von pH-Gradienten mikroskopischer Ausdehnung.

Ausführungsbeispiele zum o. a. Bereich 3 sind in den Fign. 6 und 7a, 7b dargestellt.

Gemäß Fig. 6 sind die den Elektrolytbereichen zugeordneten Kammern zum Beispiel durch Kapillaren oder Mikrokanäle 61 a-d ersetzt. Zweckmäßigerweise wird die Anordnung der Kammersysteme und der Diaphragmen verändert. Eine günstige Anordnung ist die im wesentlichen planare Gruppierung der Elektrolyt-Kammern um einen zentralen Bereich 66 herum, in dem sich die Einstell-Lösung befindet. Auf diese Weise lassen sich sehr kleine Anordnungen mit kurzen Ansprech- und Regelzeiten erzeugen (ms bis s-Bereich). In derart kleine Systeme lassen sich die Sensoren (pH-Feldeffekttransistor 64 und Leitfähigkeitssensor 63), aber auch die Ansteuerelektroden 62 a-d mittels Verfahren der Halbleitertechnologie integrieren. 67 und 68 bezeichnen den Ein- bzw. Ausfluß der Einstell-Lösung. In Abhängigkeit von der Größe sind die Kapillar- oder Mikrokanalöffnungen wieder mit Diaphragmen verschließbar. Anstelle der planaren Anordnung sind auch volumenförmige (insbesondere kugelförmige) oder lineare Anordnungen um den Raum mit der Einstell-Lösung möglich.

Eine alternative Ausführungsform eines halbleitertechnologisch strukturierten Kopfes 71 auf Silizium- oder Glasbasis ist in den Fign. 7a, 7b gezeigt. In vier Mikrokanälen befinden sich planare Gold- oder Platinelektroden 72a bis d einer Dicke im um- oder sub-µm-Bereich. Die vier Mikrokanäle verjüngen sich hin zu einer Öffnung 73 im Chip. Die Verjüngungen bilden bei der miniaturisierten Bauform die diffusionsmindernden Mittel als Phasengrenze zwischen den Elektrolytbereichen und der Einstell-Lösung. Ein auf dem Bereich der Öffnung 73 befindlicher Lösungstropfen kann im pH-Wert oder in der Ionenzusammensetzung geregelt werden (pH-Sensor hier nicht dargestellt).

Die typischen Abmessungen von a liegen zwischen 2 mm und 1 µm, bei b und c zwischen 50 mm und 100 µm. Die Größe des Systems und die sehr dünn auslaufenden Kapillaren (einige um im Austrittsdurchmesser) erlauben die pH-Einstellung nahezu ohne makroskopische Gasentwicklung an den Elektroden. Die Kanalöffnungen können größer ausgeführt werden, wenn sie mit diffusionsmindernden Mitteln partiell ausgefüllt sind.

Als eine Variante zur Handhabung als Kompaktstift kann der Chip auf einem Träger 74 (Fig. 7b) angebracht werden, der gleichzeitig unterkammert ist und die 3 oder 4 Lösungsarten enthält. Die Durchmischung der Einstell-Lösung erfolgt durch Vibration des Trägers oder auch ausschließlich über Diffusion.

Mikrogefäße können generell auf verschiedene Weise durchmischt werden, z.B. mittels eines Vibrators, mittels eines Rührers, durch Bewegung der Regelvorrichtung selbst oder durch Bewegung des Lösungsbehältnisses.

Ein weiteres Ausführungsbeispiel, das vorzugsweise mit Systemen des o. a. Größenbereiches 1 verwendet wird, ohne darauf beschränkt zu sein, stellt die Kombination einer amperometrischen Einstellvorrichtung mit konventionellen Säure-Basen-Titriermitteln dar. Es ist dann zweckmäßig, die Grobregelung konventionell titratorisch und die Feinregelung amperometrisch vorzunehmen.

Gemäß einem weiteren Ausführungsbeispiel werden die Elektrolytkammern aneinandergrenzend oder voneinander beabstandet in die Wandung von Behältnissen (Bechergläser, Küvetten, Tubes, Pipetten o. dgl.) integriert. Die Wandung bildet dann das Haltemittel zur Sicherstellung konstanter Stromwege. Eine entsprechend modifizierte Vorrichtung ist dazu eingerichtet, nicht in die Einstell-Lösung getaucht zu werden, sondern diese selbst aufzunehmen. Die Behältnisse sind leicht an ein Regelsystem anschließ-bzw. abkoppelbar. Diese Ausführungsform läßt sich vorteilhaft dazu verwenden, pH-abhängige Eigenschaften einer Komponente der Einstell-Lösung (z. B. Enzyme) beispielsweise optischspektroskopisch zu untersuchen, indem die Einstell-Lösung in das Behältnis gefüllt und ein pH-Programm durchfahren wird.

Gemäß einem weiteren Ausführungsbeispiel sind erfindungsgemäße Vorrichtungen als Durchflußanordnungen ausgeführt. Dies kann sich sowohl auf die Einstell-Lösung als auch auf die Elektrolytkammern beziehen. Aufgrund der hohen Regelgeschwindigkeit kann die Einstell-Lösung an den Phasengrenzen zu den Elektrolytkammern vorbeifließen und dabei eingestellt werden. Andererseits ist die ständige Erneuerung der Elektrolytkammern bei Systemen bevorzugt, bei denen durch Redoxreaktionen ein Verlust von Puffersubstanz erfolgen kann. Das Durchflußsystem der Elektrolytkammern führt gleichzeitig zu einer reproduzierbaren Langzeitstabilität des Regelsystems.

Erfindungsgemäß wird ferner ein pH-Einstellgerät angegeben, das Kombinationen mehrerer pH-Stifte in einem offenen oder gekammerten Gefäß zur Erzeugung von pH-Werten oder pH-Gradienten aufweist.

Es sind die folgenden Modifizierungen der Anordnung und/oder Verbindung der Elektrolytbereiche denkbar.

Die Elektrolytbereiche bzw. die entsprechenden Kammern müssen nicht gleich aufgebaut sein, sondern können verschiedene Volumina und/oder Formen aufweisen. Die Vorrichtung ist nicht auf die Stiftform beschränkt.

Die Elektrolytbereiche können durch geeignete Dialyseschläuchen mit eingeführten Steuerelektroden realisiert werden. Die Dialyseschläuche lassen sich in der Einstell-Lösung aufspannen.

Die Elektrolytbereiche können partiell miteinander verbunden werden, so daß zwischen den Kammern ein nicht über die einzustellende Lösung wandernder Strom fließen kann. Damit wird eine bequeme, elektrische Vorkonditionierung der Kammern ebenso möglich wie eine Regeneration (pH-Wertangleich).

Die Kammern (insbesondere die Neutralphasen) können einen gemeinsamen Überlauf aufweisen, so daß durch Überführung eines geringen Teils der Lösung der jeweiligen Kammer der saure mit dem basischen Anteil der Kammern gemischt wird. Das kann auf verschiedene Weise erfolgen, z.B. durch Umkehren des Stiftes und Überlaufen der Kammer, durch Elektroosmose, bei der das Volumen einer Kammer auf Kosten der anderen Kammer vergrößert ist, durch aktives Öffnen eines Ventils zwischen den Kammern, durch Einfügen eines Diaphragmas in die Kammerwand, indem durch Elektrolyse in den Elektrolytbereichen entstehende Gasblasen über ein Kanalsystem geführt werden und dabei jeweils einen Teil der Elektrolytlösung mitnehmen und in einen anderen Elektrolytbereich und/oder in andere Kammern überführen, oder durch Verwendung einer kompartimentierten Kammerfüllung (Gel-Flüssigkeit), von der sich nur bestimmte Flüssigkeitsbereiche vermischen können.

Insbesondere der letztere Mechanismus läßt sich in der Stiftausführung der Vorrichtung sehr leicht und ohne bewegliche mechanische Teile realisieren und regelt genau dann, wenn der Stift benutzt wird. D.h. wird mehr in den sauren Bereich geregelt, erfolgt auch die Rückführung aus der stärker beanspruchten Kammer.

Entsprechende Durchmischungen und Volumenüberträge können auch für die anderen Kammern genutzt werden, nicht jedoch zwischen den Donatorkammern und den übrigen Anionen/Kationen-Akzeptor/Donator-Kammern. Unter diesem Gesichtspunkt ist eine oder mehrere kombinierte Anionen/Kationen- Akzeptor/Donator- Kammer vorzuziehen, weil in diesem Kammertyp die Ansäuerung bzw. Alkalisierung jeweils wieder in gewissen Grenzen durch eine nachfolgende Regelung aufgehoben wird.

Mit einer erfindungsgemäßen Vorrichtung kann auch die elektrolytische Zusammensetzung der zu kalibrierenden Lösung modifiziert werden. Sollen anstelle oder neben der eigentlichen pH-Regelung auch Ionensorten substituiert werden, so wird für jedes zu substituierende Ion eine separate Elektrolytkammer benötigt. Bei entsprechender Anzahl der gewünschten Substitutionen kann die Anzahl der Elektrolytkammern im Vergleich zu Fig. 1 weit größer als 3 werden. Denkbare Varianten besitzen dann bis zu 10 oder mehr einzeln elektrisch ansteuerbare Kammern, die jeweils über ein Diaphragma mit der zu kalibrierenden Lösung verbunden sind. Auch hierbei lassen sich preiswerte Einweg-Anordnungen realisieren.

Die erfindungsgemäße Vorrichtung kann beschickt werden, indem die der Protonen- und Hydroxyl-Ionen-Donatorkammern und/oder der anderen Stiftkammern zunächst mit einer gleichartigen, einheitlichen Lösung, die z.B. auch destilliertes Wasser sein kann, gefüllt werden und das System anschließend in einem Ladeschritt in einer Konditionierungselektrolytlösung betrieben wird, bis sich die Ionen-Zusammensetzungen der Elektrolytbereiche geeignet in vorbestimmter Weise unterscheiden. Der Ladeschritt folgt einer programmierten Prozedur, bei der nacheinander oder intervallartig alle Steuerelektroden benutzt werden, wobei als Maß für den Fortschritt der Prozedur die Ströme in die Steuerelektroden genutzt werden. Durch ein vorgebbares Regelprogramm werden die Stiftkammern bezüglich ihrer Ionen-Zusammensetzung unterschiedlich. Danach ist die Vorrichtung für beliebige Lösung einsatzfähig. Das Einfahren kann auch in beliebigen Lösungen erfolgen. Das Regelverhalten und die Regelkapazität ist dann am Anfang etwas schlechter und verbessert sich rasch, bis sich ein stabiler Betrieb einstellt. Die später mögliche Verschlechterung durch Übersäuerung oder Überalkalisierung der Donatorkammern kann durch die bereits erläuterte Regenerationsvorrichtung begrenzt oder verhindert werden.

Die Einstellvorrichtung kann als preiswertes Einweg- oder Austausch-System eingerichtet sein. Zur Halterung von Diaphragmen oder Membranen können austauschbare Kappen verwendet werden, die die geforderten Membranbereiche enthalten und sich einfach auf die Enden der Elektrolytkammern in Form z. B. von Schläuchen, Kanälen, Rohre u.ä., aufstecken lassen.

Eine weitere Variante ist ein pH-Stift, bei dem die Diaphragmen durch Ionenaustauschermembranen ersetzt werden. Durch die Membranpermeabilitäten werden die zum Gesamtstrom beitragenden Ionensorten in der Zahl reduziert. Auf diese Weise können pH-Änderungen quantitativ erfaßt und über Strommessung Titrationskurven erhalten werden. Entsprechende enzymatische Applikationen erfordern darüber hinaus eine Temperaturregelung. Daher kann wie bei allen anderen Anwendungen mindestens ein Temperatursensor in den Stift integriert sein.

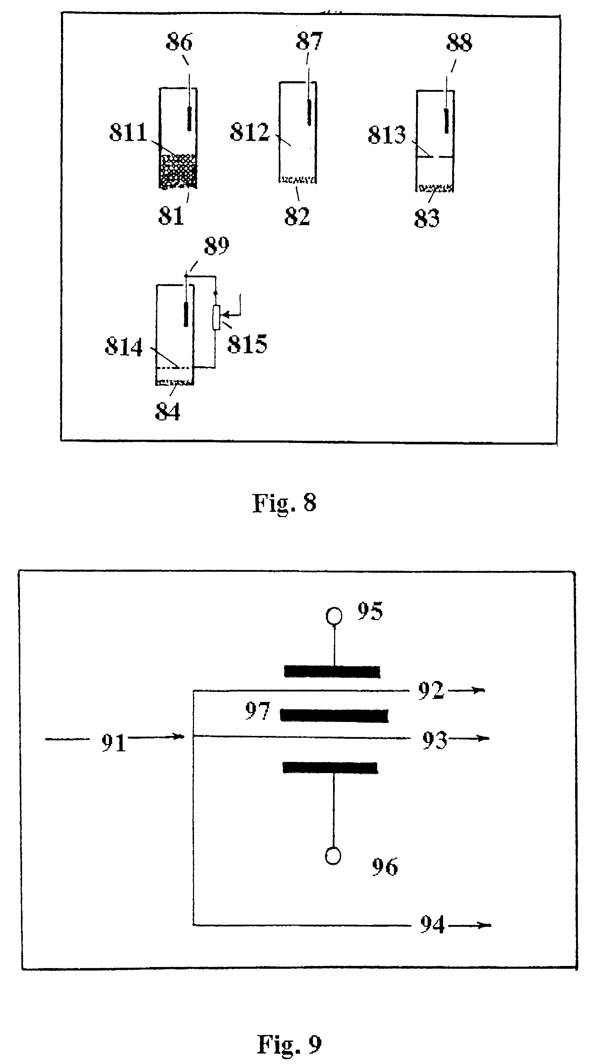

Fig. 8 zeigt verschiedene Konstruktionen zur Diffusionsverminderung in den Elektrolytbereichen und zum Pufferaustausch, um an den Elektroden gebildete und ggf. geladene Redoxprodukte am Verlassen der Elektrolytbereiche zu hindern. Jede der gezeigten Kammern besitzt eine Phasengrenze (z. B. die Membranen 81 bis 85) und eine Arbeitselektrode (86 bis 810). Diffusionsbehindernde Bereiche sind durch eine der folgenden Maßnahmen gebildet. Es kann ein fester Bereich 811 aus Gelkügelchen, festen Elektrolytkristalliten o. dgl., eine Membran 812 (z. B. eine Ionenaustauschermembran), eine Verengung 813, oder eine zweite, poröse, über ein Potentiometer 815 mit der Arbeitselektrode verbundene Elektrode 814 vorgesehen sein.

Erfindungsgemäße Vorrichtungen können mit einer Regelung verknüpft werden, die die Ströme durch die Steuerelektroden vorgibt. Die Aufgabe des Regelkreises besteht darin, bei Abweichung vom Sollwert einen positiven bzw. negativen Ausgangsstrom für jede Steuerelektrode bereitzustellen. Dieser Strom sollte dem Abstand zum Sollwert entsprechen. Vorteilhaft sind sogenannte PID-Regler mit einem Regelverhalten, das sich aus einem Proportionalanteil (P), einem Integralanteil (I) und einem Differentialanteil (D) ableitet. PID-Regler lassen Hardware- oder Softwarebezogen realisieren. Für die meisten Routineaufgaben werden OPV-Schaltungen genügen, für komplexere Regelungen sollte ein Rechner verwendet werden. Dabei kann die serielle Rechnerschnittstelle zur Erfassung des pH-Wertes und die Druckerschnittstelle zur Ausgabe des Regelwertes verwenden. Damit kann jeder gewöhnliche PC genutzt werden. Separate oder vernetzte Regelstrecken bilden die pH-Regelung, die Leitfähigkeitsregelung und evt. die Temperaturregelung.

Die Regelung kann so erfolgen, daß die Regelströme aufgezeichnet, angezeigt und mit dem Sollwert verglichen werden, wobei die Regelströme in den einzelnen Kammern unterschiedlich gehalten werden können oder auch die Regelung mit zunehmender Annäherung an den Sollwert durch Verringerung der Ströme verfeinert werden kann. Die Regelung kann mit der Bereitstellung von Steuer-Gleichströmen durch die Schaltung kombiniert werden.

Die erfindungsgemäßen Vorrichtungen erlauben eine einfache Reinigung, ggf. auch Sterilisierung. Sie sind ggf. gekühlt und mit Strömen im mA- bis A-Bereich betreibbar, so daß auch große Volumina im Liter- bis zu Kubikmeterbereich und mehr, z. B. auch Swimming Pools, Aquarien oder Waschmaschinen, eingestellt werden können.

Maßnahmen zur Erhöhung der Regelgeschwindigkeit sind z. B. eine Erhöhung der Konzentration der Lösungen in den Kammern, eine Erhöhung der Ströme und/oder eine Vergrößerung der Diaphragmen relativ zum Lösungsvolumen.

Die Regenerierung kann durch eine zeitweise und/oder partielle Verbindung oder den kontinuierlichen bzw. diskontinuierlichen Austausch der Flüssigkeiten in der/den Protonen-Donator- und Hydroxylionen-Donator-Kammern erreicht werden. Das kann ein Überlauf sein oder aber auch aktive Austauschprinzipien beinhalten. Es wird jedoch stets nur ein Teil der Lösung überführt und keine vollständige Vermischung angestrebt.

Die Regenerierung kann auch wie folgt erreicht werden. Die zwei Protonen- und Hydroxylionen-Donator-Kammern zur pH-Regelung einer Lösung sind wirksam, wenn pro Zeiteinheit mehr Protonen von der einen Kammer an die Lösung abgegeben werden, als Hydroxyl-Ionen von der anderen (und umgekehrt). Ist die Differenz gleich Null, bleibt der pH-Wert der einzustellenden Lösung konstant. Die Richtung der pH-Anderung wird dabei durch die dominierende Kammer festgelegt.

Im Zeitverlauf der Regelung wird die eine der Donatorkammern (Säurenregulator) saurer und die andere der Donatorkammern (Basenregulator) basischer. Falls es zu elektroosmotischen Erscheinungen oder Schädigungen einzelner Vorrichtungsteile (z.B. der Diffusionsbarrieren) kommt, was bei extremen Betriebsbedingungen möglich ist, kann eine der folgenden Gegenmaßnahmen realisiert werden.

Erstens ist es möglich, in jedem Elektrolytbereich jeweils zwei oder mehr Elektroden anzuordnen (vgl. Figur 7), von denen sich eine Elektrode in der Nähe und eine Elektrode entfernt von der physikalischen Phasengrenze befindet. Beide Elektroden liegen auf unterschiedlichem Potential, wobei die von der Phasengrenze entferntere Elektrode das betragsmäßig höhere Potential besitzt. Der Potentialunterschied führt zu einem Feldstärkegradienten, der geeignet ist, Redoxprodukte von der Phasengrenze fernzuhalten.

Zweitens können die Kammern laufend oder diskontinuierlich durch ein geeignetes Pumpensystem mit frischer Elektrolytlösung versorgt werden.

Drittens ist es möglich, alle Elektrolytbereiche (z. B. Säure- und Basenregulator und die Neutralphase) mit einem Elektrolyt aus einem gemeinsamen Vorratsgefäß zu versorgen, dem ein amperometrisches Modifizierungsmittel nachgeschaltet ist (vgl. Fig. 8). Das Modifizierungsmittel ist dazu vorgesehen, daß das Elektrolyt vor Befüllen der einzelnen Kammern eine geeignete Zusammensetzung aufweist. Damit wird ein dynamisches, einfach aufgebautes, ggf. regenerierbares und leicht an eine konkrete Anwendung anpaßbares System gebildet.

In Fig. 9 ist das Prinzip dieser Regulierung dargestellt. Ein vom Vorratsgefäß ausgehender Elektrolytstrom 91 wird in Teilströme 92 und 93 aufgeteilt, die unter Feldwirkung an der Anode 95 und an der Kathode 96 vorbeigeführt werden. Eine Diffusionsbarriere 97 verhindert ein Vermischen der Teilströme 92 und 93. Durch Ladungstransport ist der Teilstrom 93 nach Feldpassage basisch und der Teilstrom 92 sauer. Der Teilstrom 94 behält seinen ursprünglichen pH-Wert. Bei geeignet gewählter Verweildauer im Feld erhält man somit drei Elektrolytlösungen, die jeweils für das Befüllen eines Säurenregulators, eines Basenregulators und einer Neutralphase geeignet sind.

Die Elektrolytregeneration auf elektronischem oder mechanisch/elektrischem Weg erfolgt entweder vor der Benutzung des pH-Gerätes oder ggf. automatisch während des Betriebes oder in Betriebspausen.

Bei längerer Nichtnutzung (Stunden, Tage, Monate) und zur Regenerierung werden bei wenig konzentrierten Elektrolytlösungen (Säure-, Basen- und Neutralkammern), falls die Diaphragmen ausgetrocknet sind, diese vor der Inbetriebnahme in einer wässrigen Lösung nach den jeweils spezifischen Vorschriften aufgequollen. Bei hohen Konzentrationen, insbesondere in den Neutralkammern, läßt sich die Veränderung oder Zerstörung der Membranen durch Kristallisation mittels einer Überdeckung während der Lagerung und/oder Mittel zur Anhebung der Luftfeuchte auf mehr als 90% vermeiden. Andere Möglichkeiten sind das Eintauchen der Kammern in entsprechende Lösungen, die eine osmotische Veränderung des Kammerinnenraumes nicht oder nur geringfügig zulassen, oder auch die Regeneration einzelner Kammern über geringere Stromflüsse, als sie während der Regelung verwendet werden, ggf. über eine oder mehrere Elektroden in der Lagerlösung und die Kammerelektroden.

Es können Maßnahmen zur Erfassung des Verbrauchs oder der Erschöpfung der Elektrolytbereiche, insbesondere der Neutralphasen, vorgesehen sein. Bei Systemen mit bekannten Eigenschaften können diese Maßnahmen eine Strommessung und eine getrennte Aufsummierung des durch jede Kammer geflossenen Stromes umfassen. Alternativ kann durch Beobachtung der Regelgeschwindigkeit die Erschöpfung erfaßt werden.

Beispiele experimenteller Ergebnisse mit erfindungsgemäßen Vorrichtungen werden im folgenden beschrieben.

Entsprechend dem FARADAY'schen Gesetz kann pro Stromeinheit nur eine bestimmte Ionenmenge transportiert werden. Im Falle der pH-Regelung sind insbesondere einwertige Ionen (Protonen und Hydroxylionen) von Interesse. Die Zeit zum Einstellen des pH-Wertes einer Lösung hängt damit vom pH-Bereich und der Pufferkapazität ab. Aus diesem Grund kann in umgepufferten Lösungen der pH-Wert oder die Ionenkonzentration am schnellsten eingestellt werden.

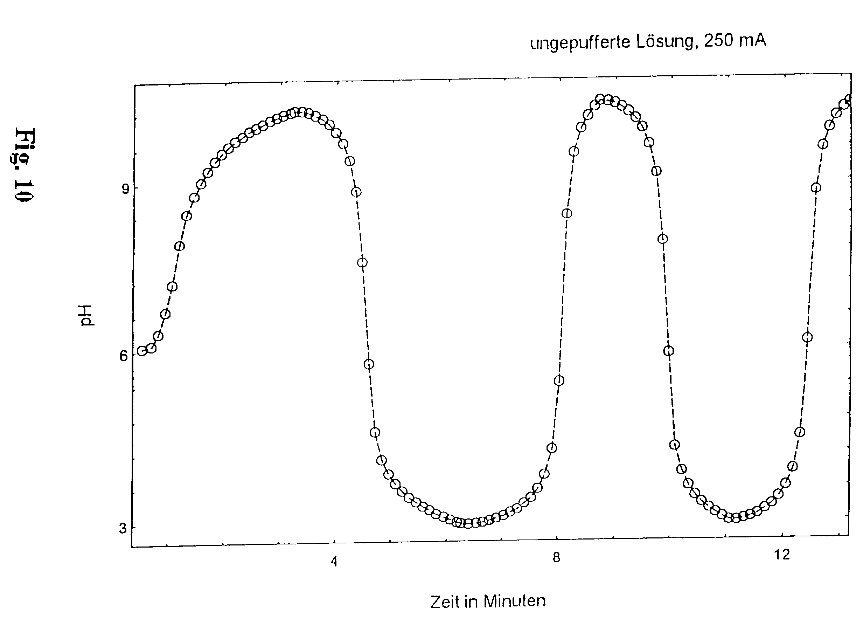

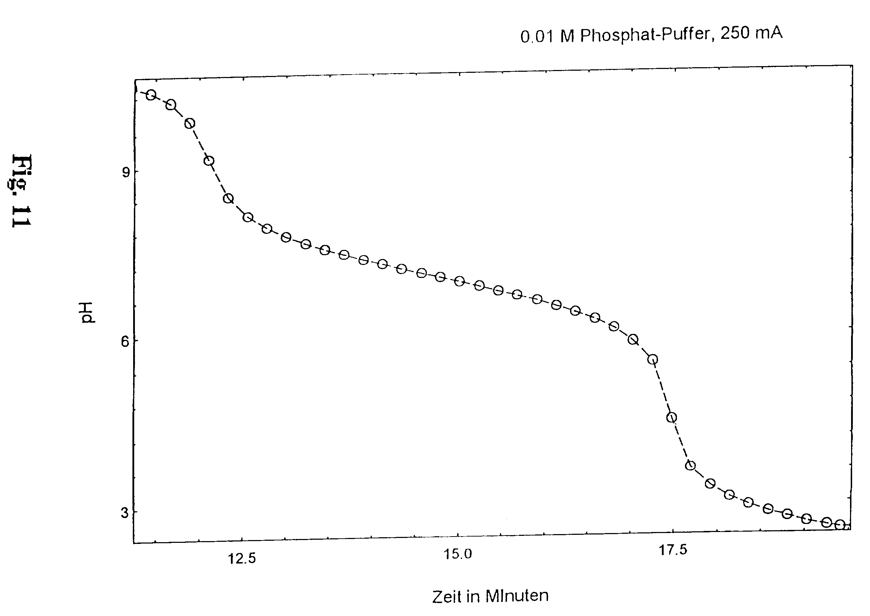

Eine typische pH-Regelung mit abwechselnden pH-Erhöhungen und -Absenkungen zwischen zwei Extremwerten in 100 ml Leitungswasser bei einem Strom von 250 mA ist in Fig. 10 dargestellt. Bei guter Durchmischung der Einstell-Lösung ist eine Verschiebung über eine pH-Einheit in wenigen Sekunden abgeschlossen. Im pH-Bereich unterhalb von pH4 und oberhalb von pH10 verlängern sich die Regelzeiten durch die exponentiell zunehmende Ionenmenge (siehe auch Fig. 11 bis 13).

Die Meßkurve in Fig. 11 zeigt die typischen Einstellzeiten in 80 ml einer schwach gepufferten Lösung (0,01 M Phosphat-Puffer) bei einem konstanten Strom von 250 mA, d. h. bei zeitlich konstantem Ionenzufluß. Dieses Ergebnis wurde mit einem Stift mit den folgenden Merkmalen erzielt:
a) 4 Kammern mit den folgenden Befüllungen und Volumina:
   - Säurenregulator:: H₂SO₄ (0,01 M), 3 ml
   - Basenregulator:: NaOH (0,01 M), 3 ml

   1. Neutralphase: KNO₃, gesättigte Lösung mit kristallisierter Bodenfüllung, 4 ml
   2. Neutralphase: KNO₃, gesättigte Lösung mit kristallisierter Bodenfüllung, 4 ml;
b) Diaphragmen: vier gleichartige Dialysemembranen einer Fläche von jeweils 1,5 cm²;
c) Elektroden: vier Platindrähte eines Durchmessers von 0,5 mm und einer Länge von 30 mm, jeweils in eine Kammer eintauchend.

Eine der Neutralphasen wurde jeweils gegen den Säurenregulator, die zweite gegen den Basenregulator betrieben. Auf diese Weise behält jede Kammer ihre Polarität bei und wird während der Regelung lediglich zu -oder abgeschaltet. Die Diaphragmen wurden zu etwa 2/3 in die Einstell-Lösung, die sich in einem 100 ml Becherglas befand, eingetaucht. Anionen bzw. Kationen der Lösung gelangen zwar in die Neutralkammern hinein, jedoch nicht wieder heraus. Die pH-Messung erfolgte über eine temperaturkompensierte Feldeffekttransistor-pH-Elektrode. Die Regelung wurde nach 10 s für jeweils 2 s unterbrochen, um den pH-Wert zu bestimmen, und danach wieder zugeschaltet. Die Durchmischung der Einstell-Lösung erfolgte über einen Magnetrührer.

Deutlich ist die Verlängerung der Einstellzeiten (flacher Kurvenverlauf) einerseits im Pufferbereich und andererseits bei niedrigem und hohem pH zu erkennen. Dies ergibt sich aus dem exponentiellen Anstieg der elektrisch zu titrierenden Protonen bzw. Hydroxylionen.

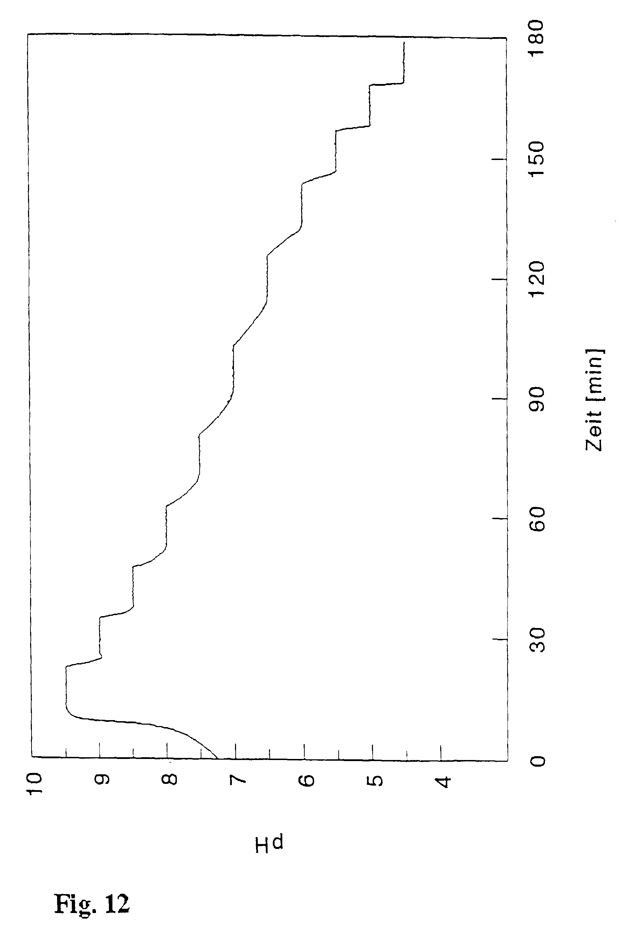

Die Treppenkurve gemäß Fig. 12 zeigt die Regelbarkeit des pH-Wertes in 8 ml einer 10 mmol Phosphatpuffer-Lösung. Der pH-Wert wurde jeweils um 0,5 pH-Einheiten gesenkt und dann für 10 min konstant gehalten. Die Regelung erfolgte auf 0,02 pH-Einheiten genau. Wiederum zeigt sich im mittleren Pufferbereich eine Absenkung der Regelgeschwindigkeit in der "Abrundung" der pH-Stufen.

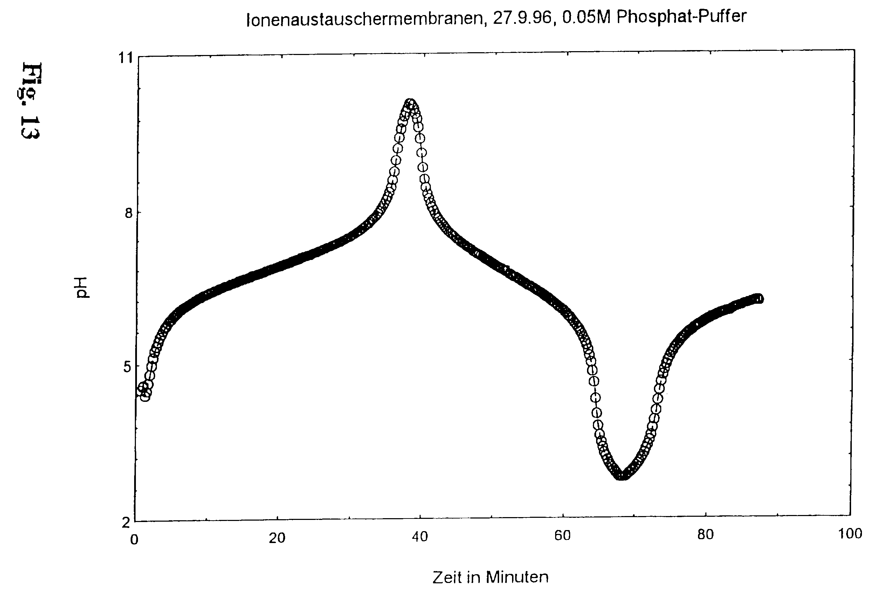

Auch in stärker gepufferten Lösungen ist bei Konstanthaltung des Stromes die pH-Zeitkurve äquivalent zu einer Titrationskurve herkömmlicher Art (Fig. 13). In gleicher Weise kann auch der Stromfluß durch einzelne Kammern genutzt werden, wenn man die Geschwindigkeit der pH-Änderung konstant hält. Prinzipiell kann aus den Stromwerten auf die Menge der zugeführten Anionen und Kationen geschlossen werden. Das System eignet sich dadurch bei bekannten Transport- oder Überführungsparametern in einfacher Weise zur quantitativen Titration von Lösungen und Lösungskomponenten (z.B. auch pH-Titration von Enzymlösungen, biologisch oder medizinische Zellsuspensionen etc.).

Bei dem in Fig. 13 dargestellten System handelt es sich um eine phosphatgepufferte (0.05 M), wässrige Lösung eines Volumens von 80 ml. Im Unterschied zu der in Fig. 11 verwendeten Stiftfüllung wurde an der Säurekammer eine Kationenaustauscher -und an der Basenkammer eine Anionenaustauschermembran verwendet. Die mit der Säurekammer betriebene Neutralphase wurde zur Betriebszeitverlängerung schwach sauer gepuffert, die andere Neutralphase entsprechend basisch gehalten. Die Ionenaustauschermembranen verkürzen die Einstellzeiten nochmals, bis auf eine Faktor von ca. 1/2. Will man die Verhältnisse noch eindeutiger gestalten (z.B. für quantitative Erfassung der zutitrierten Protonen oder Hydroxylionen), dann verwendet man auch an den ersten und zweiten Neutralphasen jeweils die ionenaustauschenden Kontermembranen.

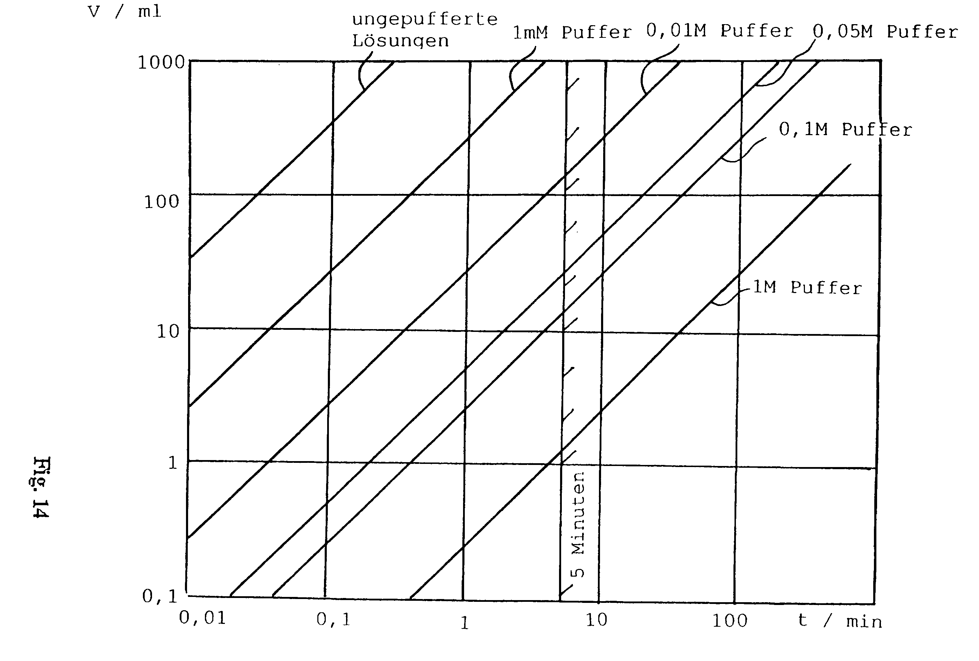

Die Leitfähigkeit der Lösung kann beliebig verändert werden, ohne daß die Regeleigenschaften beeinflußt werden. Die Randbedingungen (Regelstrom und Puffereigenschaften der Einstell-Lösung) legen die Zeit für die Ionen (insbesondere pH-Regelung) fest. In Fig. 14 ist diese Zeit in Abhängigkeit vom betrachteten Volumen für verschiedene Pufferkonzentrationen dargestellt. Zugrunde gelegt wurde ein Strom vom 250 mA durch die jeweils benutzten Kammern.

Bevorzugte Einsatzgebiete der Erfindung sind:
1. pH-Wert-Einstellung in konventionellen, frei wählbaren Behältnissen (vom Becherglas bis zu µl-Volumina und weniger) für medizinische, chemische, pharmazeutische und technische Zwecke,
2. pH-Wert-Regelung über Programme oder auf andere vorgegebene Weise als integrale Baugruppe in medizinischen, chemischen, biotechnologischen, pharmakologischen und technischen Geräten,
3. pH-Wert-Regelung für medizinische Zwecke inkorporal und exkorporal, und
4. als pH-Stat.

## Patentansprüche

1. Vorrichtung zur amperometrischen Einstellung einer Ionenkonzentration in einer Einstell-Lösung, umfassend:
- mindestens drei kammerförmige Elektrolytbereiche, die jeweils eine Steuerelektrode und diffusionsmindernde Mittel aufweisen und mit einem Elektrolyten befüllbar sind, wobei die Elektrolytbereiche alle derart mit der Einstell-Lösung in Verbindung bringbar sind, daß bei Stromfluß durch die Steuerelektroden Ionen von den Elektrolyten über die diffusionsmindernden Mittel in die Einstell-Lösung bzw. in umgekehrter Richtung transportierbar sind, und
- Mittel zur Versorgung der Elektrolytbereiche mit Steuerströmen.

2. Vorrichtung gemäß Anspruch 1, dadurch gekennzeichnet, daß die Vorrichtung zur Einstellung des pH-Wertes und/oder einer von der Wasserstoffionenkonzentration verschiedenen Ionenkonzentration der Einstell-Lösung eingerichtet ist.

3. Vorrichtung gemäß Anspruch 1 oder 2, bei der drei Elektrolytbereiche vorgesehen sind, die umfassen:
- ein erstes Regulatormittel (A), dessen Elektrolyt als Anionendonator bzw. Basenregulator wirkt und dessen Elektrode eine Kathode ist,
- ein zweites Regulatormittel (B), dessen Elektrolyt als Kationendonator bzw. Säurenregulator wirkt und dessen Elektrode eine Anode ist, und
- eine erste Neutralphase (C), deren Elektrolyt entweder als Kationendonator oder als Anionendonator wirkt und deren Elektrode entsprechend als Anode oder als Kathode betreibbar ist oder deren Elektrolyt eine derart hohe Konzentration aufweist, daß die in die Einstell-Lösung transportierbaren H- oder OH-Ionen im Vergleich zum Ionenfluß aus dem ersten und zweiten Regulatormittel vernachlässigbar sind.

4. Vorrichtung gemäß Anspruch 3, bei der ein vierter Elektrolytbereich vorgesehen ist, der eine zweite Neutralphase (D) umfaßt, wobei
die erste Neutralphase (C) als Kationendonator wirkt und deren Elektrode als Anode betreibbar ist und
die zweite Neutralphase (D) als Anionendonator wirkt und deren Elektrode als Kathode betreibbar ist, oder der Elektrolyt beider Neutralphasen eine derart hohe Konzentration aufweist, daß die in die Einstell-Lösung transportierbaren H- oder OH-Ionen im Vergleich zum Ionenfluß aus dem ersten und zweiten Regulatormittel vernachlässigbar sind.

5. Vorrichtung gemäß einem der Ansprüche 1 bis 4, bei der Haltemittel zur gemeinsamen Halterung von jeweils mindestens zwei oder allen Elektrolytbereichen vorgesehen sind.

6. Vorrichtung gemäß Anspruch 5, bei der die gemeinsam gehalterten Elektrolytbereiche aneinandergrenzend angeordnet sind.

7. Vorrichtung gemäß Anspruch 6, bei der die gemeinsam gehalterten Elektrolytbereiche so angeordnet sind, daß die diffusionsmindernden Mittel zueinander benachbart sind.

8. Vorrichtung gemäß Anspruch 7, bei der die benachbarten diffusionsmindernden Mittel als Diffusionskopf gebildet sind, der in die Einstell-Lösung mindestens partiell eintauchbar oder auf diese aufsetzbar ist.

9. Vorrichtung gemäß Anspruch 5, bei der die gemeinsam gehalterten Elektrolytbereiche voneinander beabstandet angeordnet sind.

10. Vorrichtung gemäß Anspruch 5, bei der die Haltemittel Teil der Innenwandung eines Behälters zur Aufnahme der Einstell-Lösung sind.

11. Vorrichtung gemäß einem der vorhergehenden Ansprüche, bei der mindestens ein Rührmittel vorgesehen ist, mit dem die Einstell-Lösung mischbar ist.

12. Vorrichtung gemäß einem der vorhergehenden Ansprüche, bei der mindestens ein Ionen- oder pH-Sensor vorgesehen ist, der simultan mit den Elektrolytbereichen oder getrennt von diesen mit der Einstell-Lösung in Verbindung bringbar ist.

13. Vorrichtung gemäß einem der vorhergehenden Ansprüche, bei der die diffusionsmindernden Mittel Gele, Ionenaustauscher, Membranen, Poren, Diaphragmen, mindestens eine Öffnung, die eine Größe im µm-Bereich besitzt, oder weitere Kammern mit bestimmter Ionenzusammensetzung umfassen.

14. Vorrichtung gemäß einem der vorhergehenden Ansprüche, bei der mindestens ein Elektrolytbereich einen diffusionsbehindernden Einsatz enthält, der durch Gele, Ionenaustauscher, Membranen, Poren, Diaphragmen, Glaskugeln, Fasern oder festen Elektrolyt gebildet ist und die Elektrode vom diffusionsmindernden Mittel trennt.

15. Vorrichtung gemäß einem der vorhergehenden Ansprüche, bei der mindestens ein Elektrolytbereich Belüftungsmittel aufweist, mit denen Gas aus dem Elektrolytbereich herausführbar ist.

16. Vorrichtung gemäß einem der vorhergehenden Ansprüche, bei der Regenerierungsmittel zur teilweisen Vermischung des Inhaltes der Elektrolytbereiche oder zum Austausch oder zur Erneuerung des jeweiligen Elektrolyts vorgesehen sind, wobei die Regenerierungsmittel wenigstens eines der folgenden Mittel umfassen:
einen Überlauf, ein Diaphragma, eine strom- und strömungslimitierte Öffnung zwischen den Elektrolytbereichen, oder ein ventilartig steuerbares Uberführungsmittel zum aktiven und dosierten Überführen eines Teils des Inhalts einer oder aller Elektrolytbereiche.

17. Vorrichtung gemäß einem der vorhergehenden Ansprüche, bei der mindestens ein Elektrolytbereich mehrere Elektroden aufweist, die getrennt mit verschiedenen Strömen ansteuerbar sind.

18. Vorrichtung gemäß einem der vorhergehenden Ansprüche, bei der ferner vorgesehen sind:
- mindestens ein Leitfähigkeitssensor, der mit der Einstell-Lösung in Verbindung gebracht werden kann, und/oder
- Mittel zur Temperaturerfassung und/oder -kompensation,

19. Ionen-Einstellgerät, das mindestens eine Vorrichtung gemäß einem der vorhergehenden Ansprüche enthält, wobei jeweils gemeinsam gehalterte Elektrolytbereiche eine kompakte Bauform als Stift, Teller, Kugel, Zylinder, Ellipsoid oder eine andere geschlossene Geometrie bilden, und das mindestens teilweise mit der Einstell-Lösung in Verbindung bringbar, vorzugsweise in die Einstell-Lösung tauchbar, ist.

20. Ionen-Einstellgerät gemäß Anspruch 19, das ferner eine oder mehrere der folgenden Einrichtungen enthält:
- ein Regelsystem zur teilweisen Substituierung oder Hinzufügung einer oder mehrerer Ionenarten unter Verwendung eines weiteren Elektrolytbereiches, der eine Lösung der Ionenart enthält,
- ein Regelsystem zur Aufnahme von Titrationskurven und zur Korrelation mit chemischen oder biochemischen Reaktionen durch Erfassung oder Konstanthaltung der Lösungszusammensetzung der Elektrolytbereiche und Erfassung der jeweiligen Steuerströme,
- ein System, bei dem ohne Ionen- oder pH-Sensor allein über die Einstellung der Steuerströme eine Ionenkonzentrations- oder pH-Änderung in einer Lösung erzeugt wird, und
- eine Vorrichtung zur Säuren- und/oder Basentitration.

21. Verfahren zur amperometrischen Einstellung einer Ionenkonzentration einer Einstell-Lösung umfassend die Schritte:
- Befüllen eines Systems zur amperometrischen Ionenkonzentrations-Einstellung, das mindestens drei kammerförmige Elektrolytbereiche aufweist, die jeweils eine Steuerelektrode und diffusionsmindernde Mittel enthalten, mit einer Vielzahl von Elektrolyten,
- Verbinden der diffusionsmindernden Mittel der Elektrolytbereiche mit der Einstell-Lösung, und
- Ansteuern der Elektrolytbereiche mit Steuerströmen, wobei bei Stromfluß durch die Steuerelektroden Ionen von den Elektrolyten über die diffusionsmindernden Mittel derart in die Einstell-Lösung bzw. in umgekehrter Richtung transportiert werden, daß sich die Ionenkonzentration der Einstell-Lösung ändert.

22. Verfahren gemäß Anspruch 21, bei dem der pH-Wert und/oder eine von der Wasserstoffionenkonzentration verschiedene Ionenkonzentration der Einstell-Lösung eingestellt wird.

23. Verfahren gemäß Anspruch 22, bei dem das Ansteuern als Regelvorgang unter Verwendung eines Ionen- oder pH-Sensors erfolgt.

24. Verfahren gemäß Anspruch 23, bei dem in den Regelvorgang ein Lösungswechsel in den Elektrolytbereichen einbezogen wird.

## Claims

1. Device for amperometric adjustment of an ion concentration in an adjustment solution, comprising:
- at least three chamber-shaped electrolyte regions, each with a control electrode and diffusion depressant means and which can be filled with an electrolyte, whereby the electrolyte regions can all be brought into contact with the adjustment solution in such a way that, when current flows through the control electrodes, ions can be transported from the electrolytes through the diffusion depressant means into the adjustment solution or in the reverse direction, and
- means for supplying the electrolyte regions with control currents.

2. Device according to claim 1 characterized in that the device is adapted for adjustment of the pH value and/or an ion concentration of the adjustment solution said ion concentration being different to the hydrogen ion concentration.

3. Device according to claim 1 or 2, wherein three electrolyte regions are provided which comprise:
- a first regulator means (A) whose electrolyte acts as an anion donator or base regulator and whose electrode is a cathode,
- a second regulator means (B) whose electrolyte acts as a cation donator or acid regulator and whose electrode is an anode, and
- a first neutral phase (C) whose electrolyte acts either as a cation donator or an anion donator and whose electrode can be operated accordingly as an anode or cathode, or whose electrolyte exhibits such a high concentration that the H or OH ions transportable into the adjustment solution are negligible compared to the ion flow from the first and second regulator means.

4. Device according to claim 3 in which a fourth electrolyte region is provided that comprises a second neutral phase (D), whereby
the first neutral phase (C) acts as a cation donator and whose electrode can be operated as an anode, and
the second neutral phase (D) acts as an anion donator and whose electrode can be operated as a cathode, or the electrolyte of both neutral phases exhibits such a high concentration that the H or OH ions transportable into the adjustment solution are negligible compared to the ion flow from the first and second regulator means.

5. Device according to one of the claims 1 through 4 in which holding means are provided for common holding at least two or all electrolyte regions.

6. Device according to claim 5 in which the electrolyte regions are arranged to be held next to one another.

7. Device according to claim 6 in which the electrolyte regions are arranged so that the diffusion depressant means are adjacent to one another.

8. Device according to claim 7 in which the adjacent diffusion depressant means are formed as a diffusion head that can be immersed at least partially in the adjustment solution or set down upon it.

9. Device according to claim 5 in which the common holded electrolyte regions are spaced from each other.

10. Device according to claim 5 in which the holding means are part of the inner wall of a vessel for receiving the adjustment solution.

11. Device according to one of the preceding claims in which at least one stirrer means is provided for mixing the adjustment solution.

12. Device according to one of the preceding claims in which at least one ion or pH sensor is provided that can be brought into contact with the adjustment solution at the same time as the electrolyte regions or separately from them.

13. Device according to one of the preceding claims in which the diffusion depressant means comprise gels, ion exchangers, membranes, pores, diaphragms, at least one opening with a size in the µm range, or further chambers with a certain ion composition.

14. Device according to one of the preceding claims in which at least one electrolyte region contains a diffusion depressing insert formed of gels, ion exchangers, membranes, pores, diaphragms, glass spheres, fibers or a solid electrolyte and separating the electrode from the diffusion depressant means.

15. Device according to one of the preceding claims in which at least one electrolyte region has ventilation means for extracting gas from the electrolyte region.

16. Device according to one of the preceding claims in which regeneration means are provided for partial mixing of the content of the electrolyte regions or for exchanging or renewing the particular electrolyte, whereby the regeneration means comprise at least one of the following means: an overflow, a diaphragm, a current and flow limiting opening between the electrolyte regions, or a valve-type controllable means of transfer for active and dosed transfer of part of the content of one or all electrolyte regions.

17. Device according to one of the preceding claims in which at least one electrolyte region has several electrodes that can be driven separately with different currents.

18. Device according to one of the preceding claims further comprising:
- at least one conductivity sensor that can be brought into contact with the adjustment solution and/or
- means for temperature detection and/or compensation.

19. Ion adjusting instrument that contains at least one device according to one of the preceding claims, whereby jointly held electrolyte regions form a compact construction as a pin, plate, sphere, cylinder, ellipse or other self-contained geometry, and that can be brought into at least partial contact with the adjustment solution and is preferably immersed in it.

20. Ion adjusting instrument according to claim 19 that further includes one or more of the following:
- a control system for partial substitution or addition of one or more ion types using a further electrolyte region containing a solution of the ion type,
- a control system for recording titration curves and for correlation with chemical or biochemical reactions by detecting or stabilizing the solution composition of the electrolyte regions and detecting the control currents,
- a system in which, without an ion or pH sensor, an ion concentration or pH change is produced in a solution simply by setting the control currents,
- a device for acid and/or base titration.

21. Method for amperometric adjustment of an ion concentration of an adjustment solution comprising the steps:
- filling of a system for amperometric adjustment of ion concentration that has at least three chamber-shaped electrolyte regions, each containing a control electrode and diffusion depressant means, with a plurality of electrolytes,
- contacting of the diffusion depressant means of the electrolyte regions with the adjustment solution,
- driving of the electrolyte regions with control currents, whereby, when current flows through the control electrodes, ions are transported from the electrolytes through the diffusion depressant means into the adjustment solution or in reverse direction in such a way that the ion concentration of the adjustment solution changes.

22. Method according to claim 21 by which the pH value and/or an ion concentration of the adjustment solution different to the hydrogen ion concentration is adjusted.

23. Method according to claim 22 by which driving is a control process using an ion or pH sensor.

24. Method according to claim 23 by which a change of solution in the electrolyte regions is integrated into the control process.

## Revendications

1. Dispositif de réglage ampèremétrique d'une concentration ionique dans une solution à ajuster caractérisé en ce qu'il comporte au moins trois domaines d'électrolyte en forme de chambre qui comportent chacun une électrode de commande et un moyen réduisant la diffusion et qui peuvent être remplis d'un électrolyte, les domaines d'électrolyte pouvant être tous mis en communication avec la solution à ajuster de telle façon que, par suite du passage d'un courant électrique à travers les électrodes de commande, des ions puissent être transportés à partir des électrolytes, par l'intermédiaire des moyens réduisant la diffusion, dans la solution à ajuster et en sens inverse, et un moyen pour alimenter les domaines d'électrolyte en courants électriques de commande.

2. Dispositif suivant la revendication I caractérisé en ce que le dispositif est agencé pour l'ajustement de la valeur du pH et/ou de concentrations ioniques différentes de la concentration en ions hydrogènes de la solution à ajuster.

3. Dispositif suivant l'une quelconque des revendications 1 ou 2 caractérisé en ce qu'il comprend trois domaines d'électrolyte qui comportent un premier moyen régulateur (A) dont l'électrolyte agit en tant que donneur d'ions ou régulateur de bases et dont l'électrode est une cathode, un deuxième moyen régulateur (B) dont l'électrolyte agit en tant que donneur de cations ou régulateur d'acides et dont l'électrode est une anode, et une première phase neutre (C) dont l'électrolyte agit soit en tant que donneur de cations soit en tant que donneur d'anions et dont l'électrode fonctionne d'une manière correspondante en tant qu'anode ou en tant que cathode, ou bien dont l'électrolyte présente une concentration élevée telle que les ions H- ou OH- pouvant être transportés dans la solution à ajuster sont négligeables comparativement au flux d'ions provenant des premier et second moyens régulateurs.

4. Dispositif suivant la revendication 3 caractérisé en ce qu'il comporte un quatrième domaine d'électrolyte qui comporte une seconde phase neutre (D), la première phase neutre (C) agit en tant que donneur de cations et son électrode peut fonctionner en tant qu'anode et la seconde phase neutre (D) agit en tant que donneur d'anions et son électrode peut fonctionner en tant que cathode ou bien l'électrolyte des deux phases neutres présente une concentration élevée telle que les ions H- ou OH- pouvant être transportés dans la solution à ajuster sont négligeables comparativement au flux d'ions provenant des premier et second moyens régulateurs.

5. Dispositif suivant l'une quelconque des revendications 1 à 4 caractérisé en ce qu'il comporte des moyens de maintien pour assurer un maintien commun d'au moins deux domaines d'électrolyte ou de la totalité de ces domaines.

6. Dispositif suivant la revendication 5 caractérisé en ce que les domaines d'électrolyte maintenus en commun sont adjacents les uns aux autres.

7. Dispositif suivant la revendication 6 caractérisé en ce que les domaines d'électrolyte maintenus en commun sont disposés de telle façon que les moyens réduisant la diffusion soient voisins les uns des autres.

8. Dispositif suivant la revendication 7 caractérisé en ce que les moyens réduisant la diffusion voisins les uns des autres forment une tête de diffusion qui peut être plongée, au moins partiellement, dans la solution à ajuster ou appliquée sur celle-ci.

9. Dispositif suivant la revendication 5 caractérisé en ce que les domaines d'électrolyte maintenus en commun sont disposés à distance les uns des autres.

10. Dispositif suivant la revendication 5 caractérisé en ce que les moyens de maintien sont une partie de la paroi interne d'un récipient destiné à recevoir la solution à ajuster.

11. Dispositif suivant l'une des revendications précédentes caractérisé en ce qu'il comporte au moins un moyen d'agitation au moyen duquel la solution à ajuster peut être mélangée.

12. Dispositif suivant l'une des revendications précédentes caractérisé en ce qu'il comporte au moins un capteur d'ions ou de pH qui peut être amené en communication avec la solution à ajuster soit en même temps que les domaines d'électrolyte soit en étant séparé de ceux-ci.

13. Dispositif suivant l'une des revendications précédentes caractérisé en ce que les moyens réduisant la diffusion comprennent des gels, des échangeurs d'ions, des membranes, des pores, des diaphragmes, au moins une ouverture ayant une grandeur dans le domaine des micromètres ou d'autres chambres contenant une composition ionique déterminée.

14. Dispositif suivant l'une des revendications précédentes caractérisé en ce qu'au moins un domaine d'électrolyte contient un élément intercalaire s'opposant à la diffusion qui est formé de gels, d'échangeurs d'ions, de membranes, de pores, de diaphragmes, de billes de verre, de fibres ou d'un électrolyte solide et qui sépare l'électrode du moyen réduisant la diffusion.

15. Dispositif suivant l'une des revendications précédentes caractérisé en ce qu'au moins un domaine d'électrolyte comporte un moyen de ventilation grâce auquel le gaz provenant du domaine d'électrolyte peut être évacué à l'extérieur.

16. Dispositif suivant l'une des revendications précédentes caractérisé en ce que des moyens de régénération sont prévus pour un mélange partiel du contenu du domaine d'électrolyte ou pour l'échange ou le renouvellement de l'électrolyte correspondant, les moyens de régénération comportant au moins un des moyens suivants à savoir un trop plein, un diaphragme, une ouverture limitant le courant et l'écoulement entre les domaines d'électrolyte ou bien un moyen de transmission commandable du type soupape pour permettre une transmission active et dosée d'une partie du contenu de l'un ou de la totalité des domaines d'électrolyte.

17. Dispositif suivant l'une des revendications précédentes caractérisé en ce qu'au moins un domaine d'électrolyte comporte plusieurs électrodes qui peuvent être alimentées séparément par des courants électriques différents.

18. Dispositif suivant l'une des revendications précédentes caractérisé en ce qu'il comprend en outre au moins un capteur de conductibilité électrique qui peut être mis en liaison avec la solution à ajuster, et/ou un moyen de détection et/ou de compensation de la température.

19. Appareil d'ajustement d'ions qui comporte au moins un dispositif suivant l'une des revendications précédentes, caractérisé en ce que les domaines d'électrolyte maintenus en commun forment une structure compacte du genre tige, cuvette, sphère, cylindre, ellipsoïde ou une autre géométrie fermée, laquelle peut être mise en communication, au moins partiellement, avec la solution à ajuster et peut être avantageusement plongée dans cette solution à ajuster.

20. Appareil d'ajustement d'ions suivant la revendication 19 caractérisé en ce qu'il comporte un ou plusieurs des dispositifs suivants, à savoir un système de régulation pour substituer ou ajouter, partiellement, un ou plusieurs types d'ions en utilisant un domaine d'électrolyte additionnel qui contient une solution du type d'ion précité, un système de régulation pour l'enregistrement de courbes de titrage et pour effectuer une corrélation avec des réactions chimiques ou biochimiques par la détection ou le maintien constant de la composition de la solution du domaine d'électrolyte et la détection du courant électrique de commande associé, un système au moyen duquel, sans capteur d'ions ou de pH, une modification de la concentration ionique ou du pH dans une solution peut être produite uniquement au moyen du réglage du courant électrique de commande, et un dispositif de titrage d'acides et/ou de bases.

21. Procédé d'ajustement ampèremétrique d'une concentration ionique d'une solution à ajuster caractérisé en ce qu'il comprend les étapes consistant à remplir de plusieurs électrolytes un système d'ajustement ampèremétrique de la concentration ionique qui comporte au moins trois domaines d'électrolyte en forme de chambres qui contiennent chacune une électrode de commande et un moyen réduisant la diffusion, à mettre en contact les moyens réduisant la diffusion des domaines d'électrolyte avec la solution à ajuster, et à commander les domaines d'électrolyte au moyen de courants électriques de commande de telle façon que par suite du passage de courant électrique à travers les électrodes de commande des ions soient transportés à partir des électrolytes, par l'intermédiaire des moyens réduisant la diffusion, dans la solution à ajuster et en sens inverse et qu'ainsi la concentration ionique de la solution à ajuster soit modifiée.

22. Procédé suivant la revendication 21 caractérisé en ce que la valeur du pH et/ou une concentration ionique de la solution à ajuster, différente de la concentration en ions hydrogène, est ajustée.

23. Procédé suivant la revendication 22 caractérisé en ce que la commande du processus de régulation est réalisée en utilisant un capteur d'ions ou de pH.

24. Procédé suivant la revendication 23 caractérisé en ce que dans le processus de régulation un échange de solution est effectué dans les domaines d'électrolyte.
